# EUROPEAN PATENT SPECIFICATION

(11) **EP 2 939 134 B1**
(45) Date of publication and mention of the grant of the patent: **14.11.2018**
(21) Application number: 13866735.7
(22) Date of filing: 20.12.2013
(51) Int. Cl.: G06F 15/16, H04L 29/08, G10H 1/36, H04L 29/06, A63F 13/327, H04W 4/00

(54) **METHOD AND SYSTEM FOR EXECUTING AN APPLICATION**
VERFAHREN UND VORRICHTUNG ZUR AUSFÜHRUNG EINER ANWENDUNG
PROCÉDÉ ET SYSTÈME D'EXÉCUTION D'UNE APPLICATION

(30) Priority: 28.12.2012 KR 20120157204; 14.05.2013 KR 20130054645
(43) Date of publication of application: 04.11.2015
(73) Proprietor: Samsung Electronics Co., Ltd., Suwon-si, Gyeonggi-do 443-742 (KR)
(72) Inventor: PARK, Ki-chul, Yongin-si Gyeonggi-do 446-987 (KR); SUNG, Young-jin, Suwon-si Gyeonggi-do 441-836 (KR); YANG, Ji-young, Suwon-si Gyeonggi-do 443-370 (KR)
(74) Representative: HGF Limited
(86) International application number: PCT/KR2013/011940
(87) International publication number: WO 2014/104658

(56) References cited:
- EP-A1- 1 768 323
- EP-A1- 2 053 607
- JP-A- 2002 010 360
- JP-A- 2002 010 360
- KR-A- 20120 052 897
- US-A1- 2010 273 610
- US-A1- 2012 099 566

## Description

### Technical Field

The present disclosure relates to a method and system for executing an application, according to an interaction between a device and an external device.

### Background Art

External devices connectable to another device are becoming more diverse in type, and as devices are generally becoming smarter, more devices may be used as external devices of another device. However, an external device-related application installed in a device is according to an interaction between the device and a single external device.

The above information is presented as background information only to assist with an understanding of the present disclosure. No determination has been made, and no assertion is made, as to whether any of the above might be applicable as prior art with regard to the present disclosure.

JP-2002/010360-A1 discloses a mobile terminal device of an information processing system composed of the terminal device and an information processor enabling communication, the processor receives operating instructing information showing functions of each peripheral devices via the processor and an interface proceeding an input-output of sound or data, the operating instructing information is displayed on a display of the terminal device, and the functions of each peripheral is decided selectively and sequentially, commands instructing for operations of each peripherals are sent, so that the peripherals are remote- controlled simultaneously.

EP2053607A1 discloses a method for reproducing media items using a first entertainment device, the first entertainment device being operable to communicate with a portable entertainment device via a wireless communication link, and the first entertainment device comprising media reproduction means operable to reproduce one or more media items stored on a removable storage medium comprises: reproducing a first media item using the media reproduction means, the first media item being stored on a first removable storage medium; generating, using a user interface associated with the portable entertainment device, a media list of one or more media items for reproduction by the first entertainment device; collating the media list at the first entertainment device, whilst the first media item is being reproduced by the media reproduction means; designating, at the first entertainment device, a second media item as the next media item to be reproduced by the media reproduction means after completion of the reproduction of the first media item, the second media item being selected from the media list collated at the first entertainment device; and detecting, whilst the first media item is being reproduced by the media reproduction means, whether the second media item is stored on the first removable storage medium, and, if the second media item is detected as not being stored on the first removable storage medium, storing media data relating to the first media item to a local storage medium, so that the first media item may be reproduced in dependence upon the media data stored in the local storage medium to allow the first removable storage medium to be exchanged with a second removable storage medium associated with the second media item whilst the first media item is being reproduced by the media reproduction means.

### Disclosure of Invention

### Technical Problem

Thus, an application according to interactions between a device and a plurality of external devices is required.

### Solution to Problem

Aspects of the present disclosure are to address at least the above-mentioned problems and/or disadvantages and to provide at least the advantages described below

Accordingly, an aspect of the present disclosure is to provide a method and system for executing an application according to interactions between a device and a plurality of external devices, and a computer-readable recording medium having recorded thereon a program for executing the method.

Another aspect of the present disclosure is to provide a method and system for executing an application distributing functions among a plurality of devices, and a computer-readable recording medium having recorded thereon a program for executing the method.

Another aspect of the present disclosure is to provide a method and system for executing an application distributing functions among a plurality of user devices, and a computer-readable recording medium having recorded thereon a program for executing the method.

Additional aspects will be set forth in part in the description which follows and, in part, will be apparent from the description, or may be learned by practice of the presented various embodiments.

### Advantageous Effects of Invention

According to the above embodiments, it is possible to execute an application according to interactions between a device and a plurality of external device.

### Brief Description of Drawings

The above and other aspects, features, and advantages of certain embodiments of the present disclosure will be more apparent from the following description taken in conjunction with the accompanying drawings, in which:
FIG. 1 is a block diagram of a system for executing an application according to an embodiment of the present disclosure;
FIG. 2 is a flowchart illustrating a method of executing an application according to an embodiment of the present disclosure;
FIGS. 3, 4, 5, and 6 are flowcharts for describing a connection between a host device and first through nth external devices according to various embodiments of the present disclosure;
FIG. 7 illustrates screens for describing operations of a host device according to the method of FIG. 2 according to an embodiment of the present disclosure;
FIG. 8 is a diagram for describing relationships between the host device and first through fifth external devices, when an ensemble application is selected according to the screens shown in FIG. 7 according to an embodiment of the present disclosure;
FIG. 9 illustrates screens of a host device when an application selected according to the method of FIG. 2 is a User Created Content (UCC) application according to an embodiment of the present disclosure;
FIG. 10 is a diagram for describing relationships between the host device and first through third external devices, when a UCC application is selected according to the screens shown in FIG. 9 according to an embodiment of the present disclosure;
FIG. 11 is a diagram for describing relationships between a host device and first and second external devices when an animation editing application is selected according to the method of FIG. 2 according to an embodiment of the present disclosure;
FIG. 12 is a diagram for describing relationships between a host device and first and second external devices when a game application is selected according to the method of FIG. 2 according to an embodiment of the present disclosure;
FIG. 13 is a flowchart illustrating a method of executing an application, according to another embodiment of the present disclosure;
FIG. 14 is a diagram for describing relationships between a host device and first through fifth external devices when an ensemble application is selected according to the method of FIG. 13 according to an embodiment of the present disclosure;
FIG. 15 illustrates a screen for monitoring applications executed by each external device on a host device in real-time according to an embodiment of the present disclosure;
FIG. 16 is a flowchart illustrating a method of executing an application, according to another embodiment of the present disclosure;
FIG. 17 is a block diagram of a host device of FIG. 1 according to an embodiment of the present disclosure;
FIG. 18 is a diagram of classifying programs and/or command sets stored in a storage unit of FIG. 17, according to modules according to an embodiment of the present disclosure; and
FIG. 19 is a block diagram of an external device of FIG. 1 time according to an embodiment of the present disclosure.

Throughout the drawings, it should be noted that like reference numbers are used to depict the same or similar elements, features, and structures

### Best Mode for Carrying out the Invention

In accordance with a first aspect of the present disclosure, a method of executing an application is provided. The method includes receiving, by a host device, a selection signal for an application for generating at least one content file the application comprising the plurality of distributable functions; displaying function information corresponding to each of the plurality of distributable functions; mapping the function information corresponding to each of the plurality of distributable functions toa plurality of devices, the mapping producing mapped information; requesting the plurality of devices to perform the plurality of distributable functions according to the mapped information; receiving (S1308) a respective result of performing one of the plurality of distributable functions from each of the plurality of devices; and generating (S1309) the at least one content file according to the received results .

The method may further include receiving results of performing the functions from the plurality of devices. The method may further include receiving information about the plurality of devices before the receiving of the selection signal for the application.

In accordance with a second aspect of the present disclosure, a device is provided. The device includes a storage unit configured to store information about the device and at least one external device of the device, and at least one program, a communication unit configured to communicate with the at least one external device, a touch screen configured to receive input information of a user and to output information according to execution of the at least one program, and a processor configured to provide a user interface according to the touch screen, to execute an application for generating at least one content file, the application comprising a plurality of distributable functions and distribute the plurality of distributable devices to a plurality of devices by executing the at least one program, wherein the at least one program comprises commands for executing, receives, by the device, a selection signal for the application for generating the at least one content file, the application comprising a plurality of distributable functions; displays function information corresponding to each of the plurality of distributable functions; mapping the function information corresponding to each of the plurality of devices, the mapping producing mapped information; and requests a respective results of performing one of the plurality of distributable functions from each of the plurality of devices; and generate the at least one content file according to the received results.

In accordance with another aspect of the present disclosure, a method of executing an application is provided. The method includes receiving a selection signal for an application by a host device, displaying function information distributable by the application, mapping the function information with a plurality of users, the mapping producing mapped information, and requesting devices of the plurality of users to perform functions according to the mapped information.

In accordance with another aspect of the present disclosure, a device is provided. The device includes a storage unit configured to store information about a plurality of users, and at least one program, a communication unit configured to communicate with a device of a user selected from the plurality of users, a touch screen configured to receive input information of a user of the device and to output information according to execution of the at least one program, and a processor configured to provide a user interface according to the touch screen, to execute an application distributing functions to the plurality of users by executing the at least one program, wherein the at least one program includes commands for executing, receives, by the device, a selection signal for the application, displays function information distributable by the application, maps the function information with the plurality of users, the mapping producing mapped information, and requests devices of the plurality of users to perform functions according to the mapped information, wherein the requesting is through the communication unit.

In accordance with another aspect of the present disclosure, a computer-readable recording medium having recorded thereon at least one program including commands for executing the method of executing an application is provided.

Other aspects, advantages, and salient features of the disclosure will become apparent to those skilled in the art from the following detailed description, which, taken in conjunction with the annexed drawings, discloses various embodiments of the present disclosure.

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit and of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

While such terms as "first," "second," etc., may be used to describe various components, such components must not be limited to the above terms. The above terms are used only to distinguish one component from another.

The terms used in the present specification are merely used to describe particular various embodiments, and are not intended to limit the present disclosure. All terms including descriptive or technical terms which are used herein should be construed as having meanings that are obvious to one of ordinary skill in the art. However, the terms may have different meanings according to an intention of one of ordinary skill in the art, case precedents, or the appearance of new technologies. Also, some terms may be arbitrarily selected by the applicant, and in this case, the meaning of the selected terms will be described in detail in the detailed description of the disclosure. Thus, the terms used herein have to be defined according to the meaning of the terms together with the description throughout the specification.

An expression used in the singular encompasses the expression of the plural, unless it has a clearly different meaning in the context. In the present disclosure, it is to be understood that the terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

As used herein, the term "and/or" includes any and all combinations of one or more of the associated listed items. Expressions such as "at least one of," when preceding a list of elements, modify the entire list of elements and do not modify the individual elements of the list.

Devices herein may be defined as a host device or an external device according to the topology, but is not limited thereto. For example, the devices may be defined as a host device and a peripheral device, as a host device, a main peripheral device, and a sub-peripheral device, or as a host device and a sub-host device, according to the topology. The topology means a connection form between devices (or nodes). Examples of the topology include the physical topology and the logical topology.

The topology may be determined according to a physical or logical connection between devices included in a topology structure. For example, the topology may be classified from the other topology according to at least one of a connection relationship between devices, a connection method of devices, a data transmission speed between devices, a data flow between devices, a type of signal transferred between devices, a type of application installed in a device, and a relationship between applications installed in a device, but is not limited thereto.

Also, a host device and a plurality of external devices forming the topology may be determined according to functions of devices with respect to other devices in the topology structure. Accordingly, a device may operate as at least one of a host device and an external device in the topology, but is not limited thereto.

A host device throughout the specification may distribute functions to a plurality of devices or a plurality of user devices by using an application capable of function distribution, and request the plurality of devices or the plurality of user devices to perform the distributed functions.

The plurality of devices may include an external device of a host device. In this case, function distribution by an application may be performed on the external device of the host device. For example, when an application is an ensemble application (or a performance application or musical instrument performance application), and distributable functions are a keyboard function and a drum function, a host device may request two external devices to respectively perform the keyboard function and the drum function. Alternatively, when an application is a karaoke application and distributable functions are a microphone function, a tambourine function, and a drum function, a host device may request three external devices to respectively perform the microphone function, the tambourine function, and the drum function.

The plurality of devices may include a host device and at least one external device of the host device. In this case, function distribution by an application may be performed on the host device and the at least one external device of the host device. For example, when an application is an ensemble application and distributable functions are a keyboard function and a drum function, the host device may perform the keyboard function and request an external device of the host device to perform the drum function.

The plurality of devices may be devices of a single user. Alternatively, the plurality of devices may be devices of a plurality of different users. The plurality of devices may include devices connected to one relay (for example, an Access Point (AP)). The plurality of devices may include devices according to telecommunication or long distance communication. The plurality of devices may include at least one device according to telecommunication and at least one device according to local area communication or short distance communication.

The plurality of users may include a plurality of users excluding a user A of a host device. In this case, function distribution by an application may be performed on devices of the plurality of users except for the host device. For example, when an application is an ensemble application, distributable functions may include a keyboard function and a drum function, and a user of a host device is a user A, the host device may request devices of users B and C to respectively perform the keyboard function and the drum function. The devices of the users B and C are devices capable of performing at least one of the distributable functions. The devices of the users B and C may be selected by the users B and C who are selected by the user A of the host device.

The plurality of users may include a user A of the host device and at least one user excluding the user A. In this case, function distribution by an application may be performed on the host device and a device of the at least one user. For example, when an application is an ensemble application, distributable functions are a keyboard function and a drum function, and a user of a host device is a user A, the keyboard function and the drum function may be requested to be performed by the host device and the device of the at least one of user. The device of the at least one user is a device capable of performing at least one function from among the distributable functions.

The plurality of users may include a plurality of users having devices in a physical or logical region in which the device can be connected to a relay (for example, an AP). A physical region includes a defined region, such as a home, an office, or a practice room, but is not limited thereto. A logical region includes a region defined by an Internet Protocol (IP) subnet, but is not limited thereto. The plurality of users may include a plurality of users having a device at a location capable of a telecommunication. The plurality of users may include at least one user having a device at a location capable of a telecommunication, a long distance communication, or remote communication, and at least one user having a device at a location capable of a short distance communication.

An application capable of function distribution may be a main application of applications related to distributed functions. The applications related to the distributed functions may be sub-applications of the application capable of function distribution. For example, an ensemble application may be a main application of an application related to a keyboard function, and the application related to the keyboard function may be a sub-application of the ensemble application.

According to such a relationship between the ensemble application and the application related to the keyboard function, a device installed with the ensemble application may be a host device and a device installed with the application related to the keyboard function may be an external device.

Alternatively, the same ensemble application may be installed in the host device and the external device, and the host and external devices may perform functions according to an embodiment. In this case, the external device may be referred to as a sub-host device.

An external device may include hardware and software capable of executing and controlling an application related to the external device by a host device. In this case, the external device may be referred to as an accessory for performing a keyboard function.

A main application includes a sub-application, and may control a device by using the sub-application. For example, when an application is an ensemble application, distributable functions are a keyboard function and a drum function, a host device performs the keyboard function, and an external device performs the drum function, an application related to the keyboard function performed by the host device is a sub-application of the ensemble application installed in the host device, and thus controls the host device.

An application capable of function distribution is an application capable of setting a plurality of functions. Examples of the application capable of function distribution include an ensemble application, a User Created Contents (UCC) application, an editing application, and a game application capable of setting a plurality of roles, but are not limited thereto. An application mentioned herein may be a series of computer programs performing a certain task according to an interaction between a host device and an external device.

Input information mentioned herein is touch-based input information of a user. Touch-based input information may include a request or selection of a user (for example, selection of a device to be mapped to distributable function information in an application), or a command of a user (for example, requesting a device mapped to function information to perform a function), but is not limited thereto.

The touch-based input information may be dependent on a touch-based gesture of a user. Examples of the touch-based gesture include tap (or touch), long tap (or long touch), touch and hold, touch and drag, double tap, drag, panning, flick, drag and drop, and sweep, but are not limited thereto.

The input information is not limited to the touch-based gesture. For example, the input information may be motion-based or vision-based. Motion-based input information may be according to a motion-based gesture of a user (for example, shaking a device or hitting a device). Vision-based input information may be according to a gesture of a user recognized by analyzing an input image obtained by using a camera without contacting a device.

Reference will now be made in detail to various embodiments, examples of which are illustrated in the accompanying drawings, wherein like reference numerals refer to the like elements throughout.

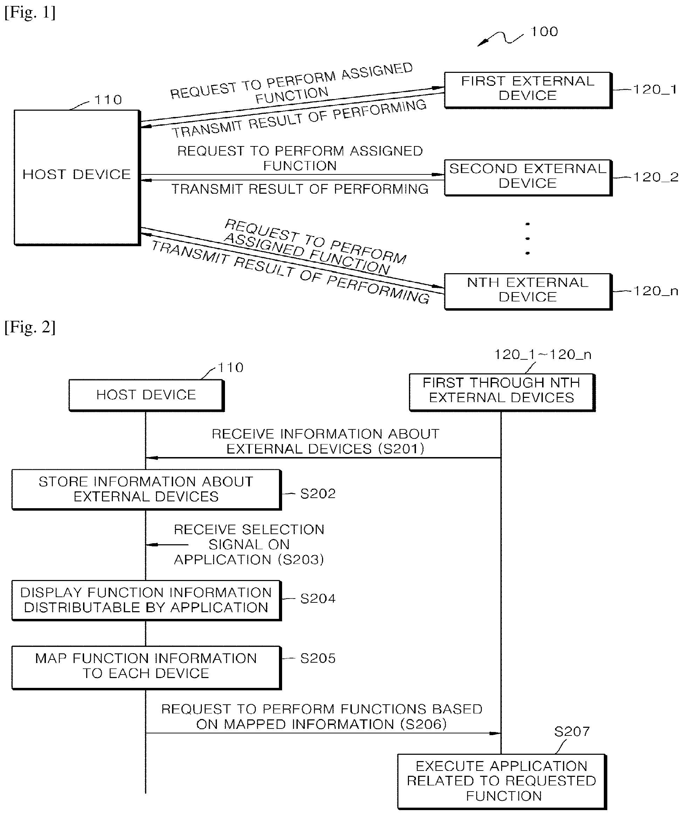

FIG. 1 is a block diagram of a system 100 for executing an application, according to an embodiment of the present disclosure. The system 100 of FIG. 1 distributes a plurality of functions of an application selected by a host device 110 to first through nth external devices 120_1 through 120_n, executes the plurality of functions by the first through nth external devices 120_1 through 120_n, and transmits results of functions performed by the first through nth external devices 120_1 through 120_n from the first through nth external devices 120_1 through 120_n to the host device 110.

Referring to FIG. 1, the system 100 includes the host device 110 and the first through nth external devices 120_1 through 120_n, but is not limited thereto. For example, the system 100 may further include at least one of a relay, a network, and a server.

The relay may relay information between the host device 110 and the first through nth external devices 120_1 through 120_n. The relay may be included in a gateway. The server may manage and provide information about the host device 110 and first through nth external devices 120_1 through 120_n. The server may include at least one of a public cloud and a private cloud, but is not limited thereto. In other words, the server may be an information providing server for providing information about a device or/and information about a user.

The information about the host device 110 and first through nth external devices 120_1 through 120_n may include information about a user of each device, standard information of each device, information about an application installed in each device, and connection information (or information related to communication methods) of each device, but is not limited thereto. The information about the application installed in each device includes at least one of type information of the application, version information of the application, and settings information of the application.

The information about a user of each device includes profile information of a user. The profile information of the user may include user identification information (for example, a user name) and use history information of an application, but is not limited thereto. The use history information may include information about a number of times an application is used and a usage cycle, but is not limited thereto.

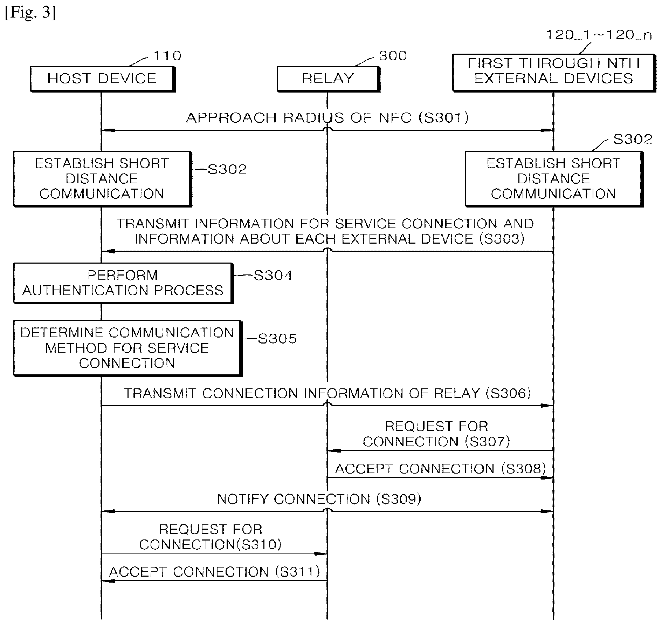

The standard information of each device may include hardware standard information of each device, configuration information of each device, a type of each device, a name of each device, a network address of each device, a control command list, and state information of each device, but is not limited thereto. The information about an application installed in each device and the connection information of each device will be described in detail later with reference to FIGS. 3 through 6.

The information about the first through nth external devices 120_1 through 120_n may be provided by the first through nth external devices 120_1 through 120_n when a basic connection is established between the host device 110 and the first through nth external devices 120_1 through 120_n. The basic connection denotes a connection between the host device 110 and the first through nth external devices 120_1 through 120_n before a service connection. The basic connection may be established when a discovery operation on a peripheral device by the host device 110 or a short distance communication between the host device 110 and the first through nth external devices 120_1 through 120_n is generated, but is not limited thereto. Here, the short distance communication may be performed according to Near Field Communication (NFC) or Bluetooth™ Low Energy (BLE).

When an application capable of function distribution is selected, the host device 110 may distribute functions to the first through nth external devices 120_1 through 120_n, and request the first through nth external devices 120_1 through 120_n to perform the distributed functions. The host device 110 may distribute a function to itself. The host device 110 may distribute functions to devices of a plurality of users by selecting the users.

In order for the host device 110 to distribute functions to the first through nth external devices 120_1 through 120_n, the host device 110 may map function information of the application and the first through nth external devices 120_1 through 120_n one-on-one by using the function information and the information about the first through nth external devices 120_1 through 120_n. Since such mapping may be viewed as matching connectable functions between the host device 110 and the first through nth external devices 120_1 through 120_n, the mapping may be referred to as service matching. The mapping between the function information and the first through nth external devices 120_1 through 120_n is not limited to one-on-one mapping. In other words, 1:N (function information : external device) mapping is possible according to the function information. A mapping method will be described in detail later.

After mapping the function information with the first through nth external devices 120_1 through 120_n, the host device 110 requests the first through nth external devices 120_1 through 120_n to perform functions according to the mapped information.

In order to request the first through nth external devices 120_1 through 120_n to perform the functions, the host device 110 establishes a service connection with the first through nth external devices 120_1 through 120_n. The service connection may be established by assigning a Transmission Control Protocol (TCP) socket according to the first through nth external devices 120_1 through 120_n. In other words, the host device 110 transmits an IP address and port information to each of the first through nth external devices 120_1 through 120_n via the basic connection. The first through nth external devices 120_1 through 120_n access the host device 110 by using the received IP address and the port information. Accordingly, the host device 110 establishes the service connection with the first through nth external devices 120_1 through 120_n by assigning a TCP socket, and requests the first through nth external devices 120_1 through 120_n to perform the distributed functions.

The host device 110 may end an operation after requesting the first through nth external devices 120_1 through 120_n to perform the functions. Alternatively, the host device 110 may maintain the service connection with the first through nth external devices 120_1 through 120_n after requesting the first through nth external devices 120_1 through 120_n to perform the functions, so as to monitor the performing of the function and output the monitoring result to a user of the host device 110 to recognize the user of the host device 110.

The host device 110 may receive results of functions performed by the first through nth external devices 120_1 through 120_n, from the first through nth external devices 120_1 through 120_n. The host device 110 may receive the results directly from the first through nth external devices 120_1 through 120_n or through the server or relay. The host device 110 may generate one content file by using the received results, as will be described in detail later.

Accordingly, the host device 110 may distribute and execute a plurality of functions included in an application to a plurality of devices, and generate a combined result by gathering results of executing the functions. Since the host device 110 is able to generate the combined result, an application mentioned herein may be referred to as a content generating application.

Examples of the host device 110 include a smart phone, a smart TeleVision (TV), a Personal Computer (PC), a desktop PC, a notebook, a smart board, a tablet PC, a navigation device, a mobile device, a handheld device or computer, a media player, an electronic book terminal, a Personal Digital Assistant (PDA), a digital camera configured for receiving touch-based gesture inputs, and a digital Consumer Electronics (CE) apparatus (for example, an apparatus having an image display and a touch-based gesture input function), but are not limited thereto.

An application installed in the host device 110 and capable of functional distribution to a plurality of devices may be a multifunction application capable of connecting applications related to the first through nth external devices 120_1 through 120_n. In this case, the application installed in the host device 110 is referred to as a main application, and the applications installed in the first through nth external devices 120_1 through 120_n are referred to as sub-applications of the applications installed in the host device 110.

When an application capable of function distribution is not installed in the host device 110, the host device 110 may download the application from the server or an external device, and then the host device 110 may install in the host device. The external device may be one of the first through nth external devices 120_1 through 120_n, but is not limited thereto.

The first through nth external devices 120_1 through 120_n may be a device included in a home network or local domain according to the host device 110. The local domain may be a physically limited space, such as a home, an office, or a restaurant. In this case, the first through nth external devices 120_1 through 120_n may be referred to as local devices of the host device 110.

Any of the first through nth external devices 120_1 through 120_n may be referred to as a main peripheral device or a sub-peripheral device of the host device 110 according to relationships between the first through nth external devices 120_1 through 120_n.

For example, when the host device 110 requests the first through third external devices 120_1 through 120_3 to perform distributed functions, but it is determined that the second external device 120_2 is unable to normally perform a distributed function assigned thereto, the second device 120_2 may search for a device capable of performing the distributed function assigned thereto from among the fourth through nth external devices 120_4 through 120_n. Such a device search may be performed according to a discovery operation.

When the nth external device 120_n is found by the device search of the second external device 120_2, and the nth external device 120_n performs the distributed function according to a request of the second external device 120_2, the second external device 120_2 may be referred to as a main peripheral device of the host device 110 and the nth external device 120_n may be referred to as a sub-peripheral device of the host device 110. However, a relationship between the main peripheral device and the sub-peripheral device is not limited to above. For example, when a relationship between devices is defined to be hierarchical, a main peripheral device and a sub-peripheral device may be defined according to the hierarchy.

It may be performed according to a current operational state of the second external device 120_2 to determine that the second external device 120_2 is unable to normally perform the distributed function. For example, in a case like that configuration of the second external device 120_2 is set not to perform an operation according to an external request when performing an operation having a high priority, the second external device 120_2 may determine that the second external device 120_2 is unable to normally perform the distributed function. Alternatively, the second external device 120_2 may determine that the second external device 120_2 is unable to normally perform the distributed function when a user of the second external device 120_2 rejects the external request. Accordingly, the first through nth external devices 120_1 through 120_n may output a message from the host device 110 requesting for the first through nth external devices 120_1 through 120-n to perform a function, and when each user of the first through nth external devices 120_1 through 120-n accepts the message, the first through nth external devices 120_1 through 120_n may perform the distributed functions.

The first through nth external devices 120_1 through 120_n may include hardware and software similar to those of the host device 110. Accordingly, the first through nth external devices 120_1 through 120_n may perform a plurality of functions to be distributed to a plurality of devices. For example, when distributable functions of an ensemble application are a vocal function, a guitar function, and a keyboard function, an application capable of performing all of the vocal function, the guitar function, and the keyboard function, or the ensemble application installed in the host device 110 may be installed in the first through nth external devices 120_1 through 120_n.

In this case, the first through nth external devices 120_1 through 120_n may operate as various accessories of the host device 110 according to circumstances. For example, when the ensemble application installed in the host device 110 is installed in the first through nth external devices 120_1 through 120_n, and the ensemble application is selected by the host device 110, the host device 110 may compare the information about the first through nth external devices 120_1 through 120_n to assign an electric guitar function to the first external device 120_1. When an UCC application installed in the host device 110 is installed in the first through nth external devices 120_1 through 120_n and the UCC application is selected by the host device 110, the host device 110 may compare the information about the first through nth external devices 120_1 through 120_n to distribute a camera function to the first external device 120_1. As such, the first external device 120_1 may be assigned the electric guitar function or the camera function according to an application selected by the host device 110.

The host device 110 may distribute functions according to performance of the first through nth external devices 120_1 through 120_n. The performance of the first through nth external devices 120_1 through 120 may be determined according to information about the first through nth external devices 120. Accordingly, in a case like that the information about the first through nth external devices 120_1 through 120_n is changed, a function assignable to each external device may be changed. Changing the information about the first through nth external devices 120_1 through 120_n may include changing devices included in the first through nth external devices 120_1 through 120_n.

The first through nth external devices 120_1 through 120_n may perform a direct short distance communication with the host device 110. The first through nth external devices 120_1 through 120_n may be devices connected to one AP and the host device 110. Applications executed by the first through nth external devices 120_1 through 120_n may be referred to as sub-applications of an application capable of function distribution and executed by the host device 110.

A local domain including the host device 110 and the first through nth external devices 120_1 through 120_n may be a logical domain according to an IP subnetwork.

Examples of the first through nth external devices 120_1 through 120_n include at least one of a smart phone, a smart TV, a PC, a desktop PC, a notebook, a smart board, a tablet PC, a navigation device, a mobile device, a handheld device or computer, a media player, an electronic book terminal, a PDA, a digital camera configured for receiving touch-based gesture inputs, and a digital CE apparatus (for example, an apparatus including an image display and a touch-based gesture input function), but are not limited thereto.

The first through nth external devices 120_1 through 120_n may be connected to or may not be connected to the host device 110. When the first through nth external devices 120_1 through 120_n are not connected to the host device 110, the host device 110 may store the information about the first through nth external devices 120_1 through 120_n and the information about the host device 110.

The system 100 of FIG. 1 is according to direct communication between the host device 110 and the first through nth external devices 120_1 through 120_n. An example of direct communication includes short distance communication, such as Bluetooth™ communication or WiFi direct communication. However, when the system 100 includes the relay, the host device 110 and the first through nth external devices 120_1 through 120_n may open a communication session through the relay (or a gateway).

Communication between the host device 110 and the first through nth external devices 120_1 through 120_n may be performed according to one of Machine-To-Machine (M2M) communication, Device-To-Device (D2D) communication, or Peer To Peer (P2P) communication.

Communication between the host device 110 and the first through nth external devices 120_1 through 120_n may be performed according to wireless communication or wired communication.

When the communication between the host device 110 and the first through nth external devices 120_1 through 120_n is performed according to the wireless communication, the communication between the host device 110 and the first through nth external devices 120_1 through 120_n may be performed according to wireless network communication, such as a wireless Local Area Network (LAN) without an AP (for example, a WiFi direct or ad hoc mode wireless LAN), ZigBee™ communication, Bluetooth™ communication, InfraRed Data Association (IrDA) communication, Radio Frequency IDentification (RFID) communication, Near Field Communication (NFC), a wireless LAN through an AP (for example, a WiFi or infrastructure mode wireless LAN), third generation/fourth generation (3G/4G) Long Term Evolution (LTE)-based communication, Internet communication, wireless Intranet communication, mobile phone network communication, or Ultra WideBand (UVB) communication, but is not limited thereto.

When the communication between the host device 110 and the first through nth external devices 120_1 through 120_n is performed according to the wired communication, the communication between the host device 110 and the first through nth external devices 120_1 through 120_n may be performed according to a method using a telephone line (for example, a home Phoneline Network Alliance (PNA), a method using a power line (for example, HomePlug™, LongWorks™, or HNCP), a method using Ethernet (for example, Institute of Electrical and Electronic Engineers (IEEE) 802.3), or a structured wiring method, but is not limited thereto.

FIG. 2 is a flowchart illustrating a method of executing an application, according to an embodiment of the present disclosure.

Referring to FIG. 2, the first through nth external devices 120_1 through 120_n are requested to perform functions distributed by an application selected by the host device 110.

In operation S201, the host device 110 receives the information about the first through nth external devices 120_1 through 120_n. The information about the first through nth external devices 120_1 through 120_n may be received when the basic connection is established between the host device 110 and the first through nth external devices 120_1 through 120_n as described above in FIG. 1. The information about the first through nth external devices 120_1 through 120_n is described above with reference to FIG. 1. Operation S201 may be as depicted in FIGs. 3 through 6, but is not limited thereto.

FIGs. 3 through 6 are flowcharts for describing a basic connection established between the host device 110 and the first through nth external devices 120_1 through 120_n according to short distance communication, according to an embodiment of the present disclosure.

Referring to FIG. 3, the basic connection between the host device 110 and the first through nth external devices 120_1 through 120_n is established according to NFC, and a service connection is established by using a relay 300.

When a distance between the host device 110 and the first through nth external devices 120_1 through 120_n is within a radius suitable for NFC in operation S301, the host device 110 and the first through nth external devices 120_1 through 120_n each detect that a short distance communication connection between the host device 110 and the first through nth external devices 120_1 through 120_n has been established in operation S302.

In operation S303, the first through nth external devices 120_1 through 120_n transmit information for a service connection and the information about the first through nth external devices 120_1 through 120_n via NFC.

In operation S304, the host device 110 performs an authentication process on the first through nth external devices 120_1 through 120_n. The authentication process may be performed by authenticating pre-determined authentication information received from the first through nth external devices 120_1 through 120_n. Accordingly, the authentication information may be received from the first through nth external devices 120_1 through 120_n in operation S303. If the authentication information is not received in operation S303 and the authentication process is not performed, operation S304 may be omitted.

When the authentication process is performed but the authentication information is not received or wrong authentication information is received, the host device 110 may disconnect the basic connection between the host device 110 and the first through nth external devices 120_1 through 120_n.

In operation S305, the host device 110 determines a communication method for the service connection between the host device 110 and the first through nth external devices 120_1 through 120_n according to the received information for the service connection.

For example, when the information for the service connection includes information indicating a Bluetooth™ communication method, the host device 110 may determine that the Bluetooth™ communication method will be used as the communication method for the service connection. When the information for the service connection includes an infrastructure mode wireless LAN communication method, the host device 110 may determine that the infrastructure mode wireless LAN communication method will be used as the communication for the service connection.

Referring to FIG. 3, the communication method for the service connection is performed through the relay 300. Accordingly, in operation S306, the host device 110 transmits connection information related to the relay 300 to the first through nth external devices 120_1 through 120_n. Referring to FIG. 3, the host device 110 is not connected to the relay 300, and the connection information related to the relay 300 is stored in the host device 110. The connection information related to the relay 300 is required for a connection to the relay 300. For example, the connection information related to the relay 300 may include at least one of a Service Set IDentifier (SSID), channel information, security and authentication key information, encryption key information, an IP address, and a Media Access Control (MAC) address, but is not limited thereto.

In operation S307, the first through nth external devices 120_1 through 120_n request the relay 300 to establish a connection by using the received connection information related to the relay 300. When the relay 300 accepts the request and subsequently establishes a connection in operation S308, then in operation S309 the first through nth external devices 120_1 through 120_n notify the host device 110 that the connection between the first through nth external devices 120_1 through 120_n and the relay 300 is established.

In operation S310, the host device 110 requests the relay 300 to establish a connection by using the connection information related to the relay 300. When the relay 300 accepts the request and subsequently establishes a connection between the host device 110 and the relay 300 in operation S311, a service connection between the host device 110 and the first through nth external devices 120_1 through 120_n may be established through the relay 300.

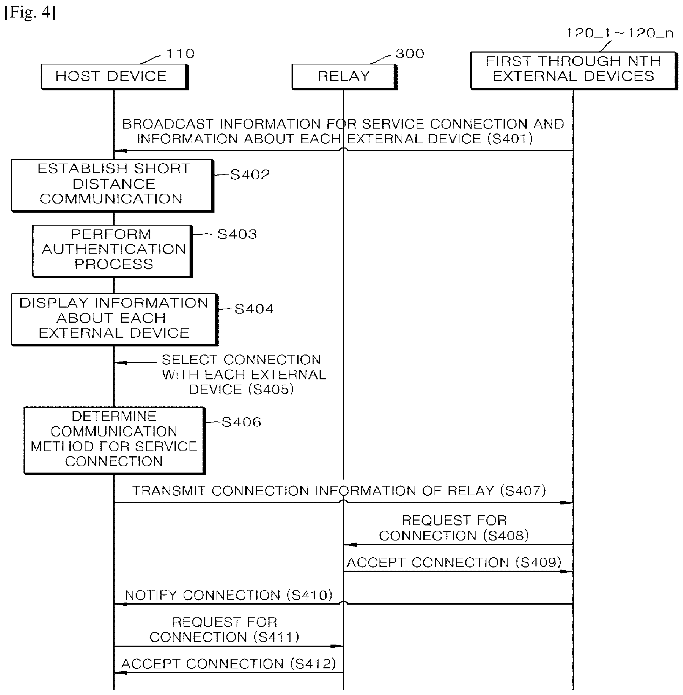

Referring to FIG. 4, the basic connection is established according to a BLE communication method and the service connection is established by using the relay 300.

Upon receiving the information for the service connection and the information about the first through nth external devices 120_1 through 120_n broadcast from the first through nth external devices 120_1 through 120_n in operation S401, the host device 110 may detect that short distance communication between the host device 110 and the first through nth external devices 120_1 through 120_n is established in operation S402.

In operation S403, the host device 110 performs an authentication process on the first through nth external devices 120_1 through 120_n. The authentication process may be performed by authenticating pre-determined authentication information received from the first through nth external devices 120_1 through 120_n. Accordingly, the authentication information may be received from the first through nth external devices 120_1 through 120_n in operation S401. When the authentication information is not received in operation S401 and the authentication process is not performed, operation S403 may be omitted.

When the authentication process is performed, but the authentication information is not received or wrong authentication information is received, the host device 110 may disconnect short distance communication between the host device 110 and the first through nth external devices 120_1 through 120_n.

In operation S404, the host device 110 displays the information about the first through nth external devices 120_1 through 120_n. Accordingly in operation S401, the first through nth external devices 120_1 through 120_n may transmit the information about the first through nth external devices 120_1 through 120_n to the host device 110.

Alternatively, after it is detected that the short distance communication between the host device 110 and the first through nth external devices 120_1 through 120_n is established in operation S402, the host device 110 may receive the authentication information and the information about the first through nth external devices 120_1 through 120_n according to an information request sent from the host device 110 to the first through nth external devices 120_1 through 120_n.

When a user input for selecting the first through nth external devices 120_1 through 120_n is received in operation S405 according to the displayed information about the first through nth external devices 120_1 through 120_n, the host device 110 determines a communication method for the service connection between the first through nth external devices 120_1 through 120_n and the host device 110 in operation S406 according to the information for the service connection received in operation S401. The determining of the communication method may be performed as described above with respect to operation S305 of FIG. 3.

Referring to FIG. 4, the communication method for the service connection between the first through nth external devices 120_1 through 120_n and the host device 110 is performed through the relay 300. Accordingly in operation S407, the host device 110 may transmit connection information related to the relay 300 to the first through nth external devices 120_1 through 120_n. Referring to FIG. 4, the host device 110 is not connected to the relay 300 and the connection information related to the relay 300 may be stored in the host device 110.

In operation S408, the first through nth external devices 120_1 through 120_n requests the relay 300 to establish a connection by using the received connection information related to the relay 300. When the relay 300 accepts the request and subsequently establishes a connection in operation S409, then in operation S410 the first through nth external devices 120_1 through 120_n notifies the host device 110 that the connection between the relay 300 and the first through nth external devices 120_1 through 120_n is established.

In operation S411, the host device 110 requests the relay 300 to establish a connection by using the connection information related to the relay 300. When the relay 300 accepts the request and subsequently establishes a connection between the relay 300 and the host device 110 in operation S412, a service connection between the host device 110 and the first through nth external devices 120_1 through 120_n may be established.

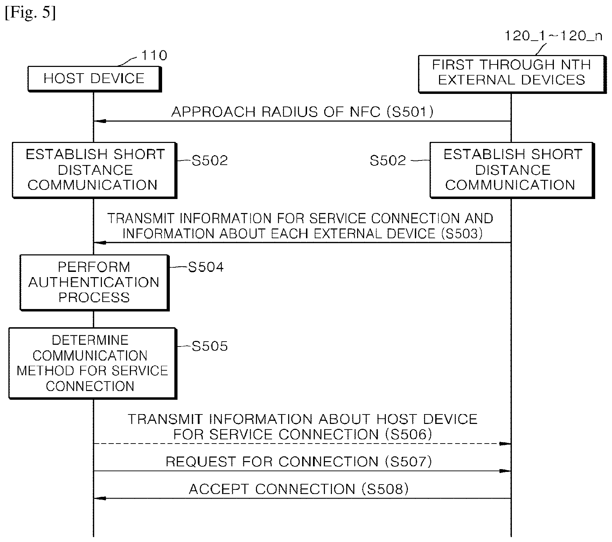

Referring to FIG. 5, the basic connection is established according to NFC communication method and the service connection is established according to a direct communication method between devices.

When the distance between the host device 110 and the first through nth external devices 120_1 through 120_n is within the radius suitable for NFC in operation S501, the host device 110 and the first through nth external devices 120_1 through 120_n each detect that the NFC connection between the host device 110 and the first through nth external devices 120_1 through 120_n is established in operation S502.

In operation S503, the first through nth external devices 120_1 through 120_n transmit the information for the service connection and the information about the first through nth external devices 120_1 through 120_n to the host device 110 via the NFC.

In operation S504, the host device 110 performs an authentication process on the first through nth external devices 120_1 through 120_n. The authentication process may be performed by authenticating pre-determined authentication information received from the first through nth external devices 120_1 through 120_n. Accordingly, the authentication information may be received from the first through nth external devices 120_1 through 120_n in operation S503. When the authentication information is not received in operation S503 and the authentication process is not performed, operation S504 may be omitted.

When the authentication process is performed, but the authentication information is not received or wrong authentication information is received, the host device 110 may disconnect the short distance communication between the host device and the first through nth external devices 120_1 through 120_n.

In operation S505, the host device 110 determines a communication method for the service connection between the host device 110 and the first through nth external devices 120_1 through 120_n according to the received information for the service connection. The determining of the communication method for the service connection may be determined as described above.

Referring to FIG. 5, the communication method for the service connection between the host device 110 and the first through nth external devices 120_1 through 120_n is performed directly between devices. Accordingly in operation S506, the host device 110 may transmit information about the host device 110 required for direct communication to the first through nth external devices 120_1 through 120_n according to NFC. Accordingly, the first through nth external devices 120_1 through 120_n may first attempt direct communication with the host device 110 by using the information about the host device 110.

Referring to FIG. 5, operation S506 may not be performed so that only the host device 110 attempts direct communication between the first through nth external devices 120_1 through 120_n and the host device 110. In operation S507, the host device 110 requests for connection with the first through nth external devices 120_1 through 120_n according to the information about the service connection related to the first through nth external devices 120_1 through 120_n. When the first through nth external devices 120_1 through 120_n accept the connection request in operation S508, the host device 110 may establish the service connection with the first through nth external devices 120_1 through 120_n.

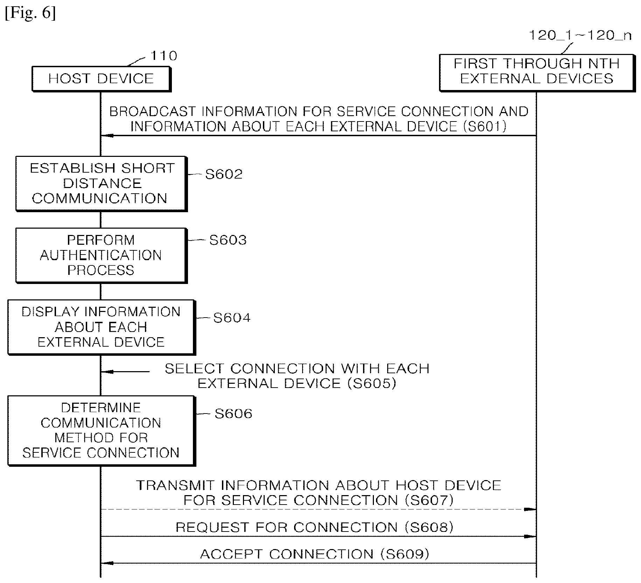

Referring to FIG. 6, the physical connection is performed according to BLE communication method and the service connection is performed according to a directly between devices.

Upon receiving the information for the service connection and the information about the first through nth external devices 120_1 through 120_n broadcasted from the first through nth external devices 120_1 through 120_n according to the BLE communication in operation S601, the host device 110 detects that the short distance communication between the host device 110 and the first through nth external devices 120_1 through 120_n is established in operation S602. In operation S601, the first through nth external devices 120_1 through 120_n may not transmit application information.

In operation S603, the host device 110 performs an authentication process on the first through nth external devices 120_1 through 120_n. The authentication process may be performed by authenticating pre-determined authentication information received from the first through nth external devices 120_1 through 120_n. Accordingly, the authentication information may be received from the first through nth external devices 120_1 through 120_n in operation S601. When the authentication information is not received in operation S601 and the authentication process is not performed, operation S603 may be omitted.

When the authentication process is performed, but the authentication information is not received or wrong authentication information is received, the host device 110 may disconnect the short distance communication between the host device 110 and the first through nth external devices 120_1 through 120_n.

In operation S604, the host device 110 displays the information about the first through nth external devices 120_1 through 120_n. Accordingly, in operation S601, the first through nth external devices 120_1 through 120_n may transmit the information about the first through nth external devices 120_1 through 120_n to the host device 110.

After it is detected that the short distance communication is established in operation S602, the host device 110 may receive the authentication information and the information about the first through nth external devices 120_1 through 120_n according to an information request sent from the host device 110 to the first through nth external devices 120_1 through 120_n.

When a user input for selecting the first through nth external devices 120_1 through 120_n is received in operation S605 according to the displayed information about the first through nth external devices 120_1 through 120_n, the host device 110 determines a communication method for the service connection between the host device 110 and the first through nth external devices 120_1 through 120_n according to the information for the service connection in operation S606. The determining of the communication method for the service connection between the host device 110 and the first through nth external devices 120_1 through 120_n is performed as described above with reference to operation S305 of FIG. 3.

Referring to FIG. 6, the communication method for the service connection is performed according to a direct communication method between devices. Accordingly, in operation S607, the host device 110 may transmit the information about the host device 110 required for direct communication between devices to the first through nth external devices 120_1 through 120_n via the BLE communication. Accordingly, the first through nth external devices 120_1 through 120_n may first attempt direct communication with the host device 110 by using the information about the host device 110.

Alternatively, operation S607 may not be performed so that only the host device 110 attempts direct communication with the first through nth external devices 120_1 through 120_n.

In operation S608, the host device 110 requests for connection with the first through nth external devices 120_1 through 120_n according to the information about the service connection of the first through nth external devices 120_1 through 120_n. When the first through nth external devices 120_1 through 120_n accept the connection request in operation S609, the host device 110 may establish the service connection with the first through nth external devices 120_1 through 120_n.

Operations after determining the communication method for the service connection in FIGS. 3 through 6 may be performed as depicted between operations S205 and S206 of FIG. 2.

Referring back to FIG. 2, the host device 110 stores the received information about the first through nth external devices 120_1 through 120_n in operation S202. Upon receiving a signal for selecting an application in operation S203, the host device 110 displays function information distributable in the application in operation S204.

The host device 110 maps the displayed function information to each device in operation S205. The device mapping may be performed by using the information about the first through nth external devices 120_1 through 120_n and the displayed function information as described above with reference to FIG. 1.

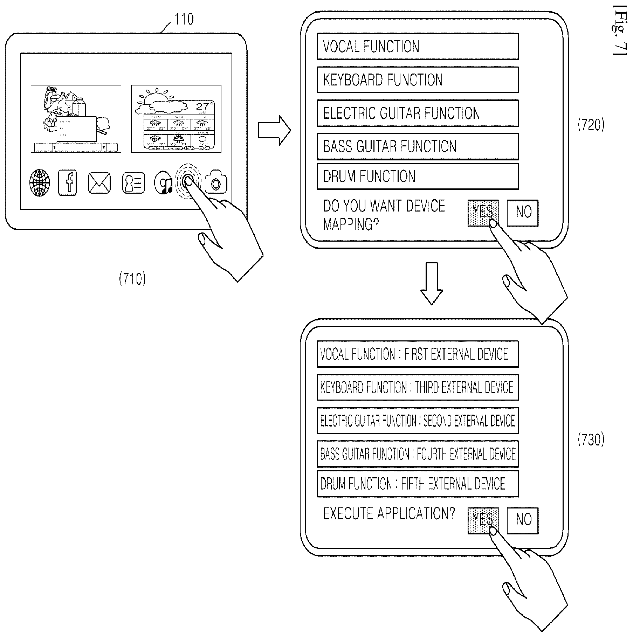

FIG. 7 illustrates screens 710 through 730 for describing operations of the host device 110 in operations S203 through S205 of FIG. 2, wherein an ensemble application is selected according to an embodiment of the present disclosure.

When a screen including an icon of an ensemble application is displayed on the host device 110 as shown in the screen 710 of FIG. 7, and a selection signal on the ensemble application is received according to the screen 710 in operation S302, the host device 110 displays distributable functions as shown in the screen 720. As shown in FIG. 7, when the distributable functions are displayed upon receiving the selection signal on the ensemble application, it may be determined that the distributable functions are pre-set.

Alternatively, the distributable functions may be selected by the user or arbitrarily set by the user according to pre-set functions. Selecting or setting distributable function by the user may be performed as the user selects an additional menu item in the screen 720, but is not limited thereto.

When a user input desiring device mapping is received via the screen 720, the host device 110 maps each function to a device and displays results of mapping as shown in the screen 730.

The ensemble application may distribute functions according to an ensemble type. Referring to FIG. 7, an ensemble type may be a musical band such that the distributable functions include a vocal function, an electric guitar function, a bass guitar function, a keyboard function, and a drum function. Alternatively, when the ensemble application is selected, a plurality of ensemble types may be provided and different distributable functions may be provided according to the ensemble types.

For example, when ensemble types are a string trio (a violin, a viola, and a cello), a string quartet (two violins, a viola, and a cello), and a musical band (vocals, an electric guitar, a base guitar, a keyboard, and drums), functions according to musical instruments may be provided according to the ensemble types. Alternatively, ensemble types and functions according to the ensemble types may be selected or arbitrarily set by the user. For example, the user may set ensemble types, such as a classic duo, a classic trio, a first musical band, and a second musical band, and the user may directly input musical instruments to be used in each ensemble type.

In the screen 730, one function is assigned to one device. However, one function may be mapped to a plurality of devices. In this case, a number (for example, 2) indicating the number of mapped devices may be displayed to the right of the mapped device, but is not limited thereto.

When the number indicating the number of mapped devices is displayed and a user input selecting a corresponding display field is received, the host device 110 displays information about selectable devices according to the corresponding display field. The information about the selectable devices may be displayed on a popup window, but is not limited thereto. When a user input selecting a device according to the information about the selectable devices displayed on the popup window is received, the popup window disappears and the host device 110 displays information about mapping the selected device to a corresponding function.

When a command requesting to execute an application is received from the user after mapping the functions and the external devices, the host device 110 requests each external device to perform the functions according to the mapped information through a communication channel connected to each external device, in operation S206. When the functions are requested to be performed, the host device 110 may provide requested function information and application information related to the function information. The communication channel connected between the host device 110 and an external device mapped to a function may be set according to the information for the service connection described above with reference to FIGS. 3 through 6. Accordingly, the first through nth external devices 120_1 through 120_n execute an application related to a requested function in operation S207.

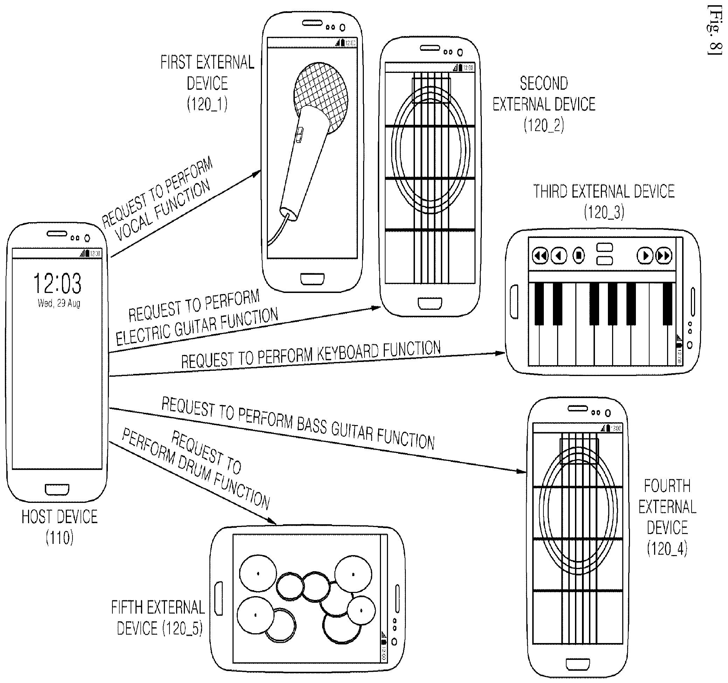

FIG. 8 is a diagram for describing relationships between the host device 110 and first through fifth external devices 120_1 through 120_5 when the ensemble application is selected according to the screens 710 through 730 shown in FIG. 7 according to an embodiment of the present disclosure. As shown in the screen 730 of FIG. 7, functions are assigned to each of the first through fifth external devices 120_1 through 120_5 and are requested to be performed by those devices respectively.

Accordingly, the first through fifth external devices 120_1 through 120_5 perform the assigned functions. When the ensemble application installed in the host device 110 requests the functions to be performed, the ensemble application may additionally provide metronome-based sound (or note) information. The first through fifth external devices 120_1 through 120_5 may freely input sounds according to the received metronome-based sound information and may record music simultaneously while being used to play a musical instrument. Metronome-based sound is sound showing a tempo of music at a uniform speed. Applications executed by the first through fifth external devices 120_1 through 120_5 output audio of the received metronome-based sound information to listen the received metronome-based sound by each user.

When the sound is recorded, the applications executed in the first through fifth external devices 120_1 through 120_5 may mute the metronome-based sound. Accordingly, the sound recorded by the first through fifth external devices 120_1 through 120_5 does not include the metronome-based sound.

When the ensemble application is not in a recording mode but is in an improvisation mode or an ensemble mode without recording, the host device 110 does not provide the metronome-based sound information. Alternatively, the host device 110 may transmit display information corresponding to beat information that may aid a user when playing music via the first through fifth external devices 120_1 through 120_n. Accordingly, the first through fifth external devices 120_1 through 120_n may be used to play music according to the display information. Since a vocal function is requested to be performed by the first external device 120_1, voice may be input to the first external device 120_1.

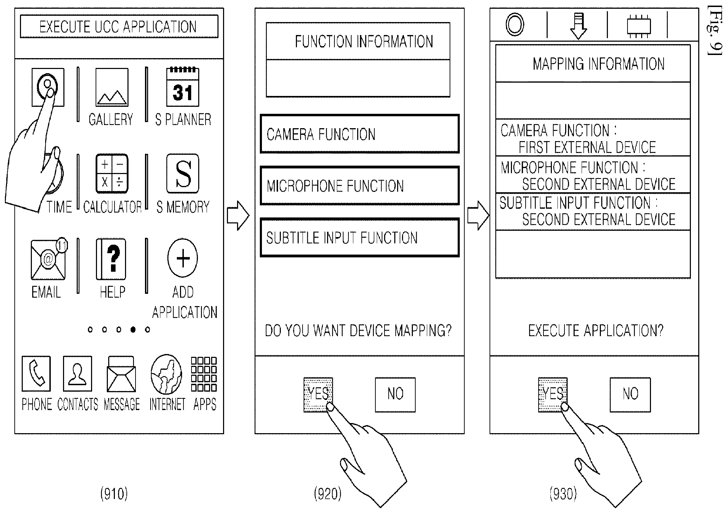

FIG. 9 illustrates screens 910 through 930 of the host device 110 when an application selected according to the method of FIG. 2 is a UCC application according to an embodiment of the present disclosure.

In detail, when the UCC application is selected from the screen 910 displayed on the host device 110 in operation S203 of FIG. 2, the host device 110 displays distributable functions as shown in the screen 920 in operation S204. When a user input desiring device mapping is received in the screen 920, the host device 110 maps an external device to a corresponding function in operation S205, and displays results of the mapping as shown in the screen 930. For example, a camera function may be mapped to a first external device, and a microphone function and a subtitle input function may be mapped to a second external device. The mapping between functions and external devices may be performed by using information about the external devices and function information as described above with reference to FIG. 2. Alternatively, the mapping between functions and external devices may be performed by the user input as described above with reference to FIG. 7. Also, when a plurality of devices are mapped for one function, at least one of the plurality of devices may be selected by the user as described above with reference to FIG. 7.

When a command of the user desiring to execute the application is received in the screen 930, the host device 110 transmits a signal to an external device, requesting the external device to perform an assigned function which corresponds to the external device.

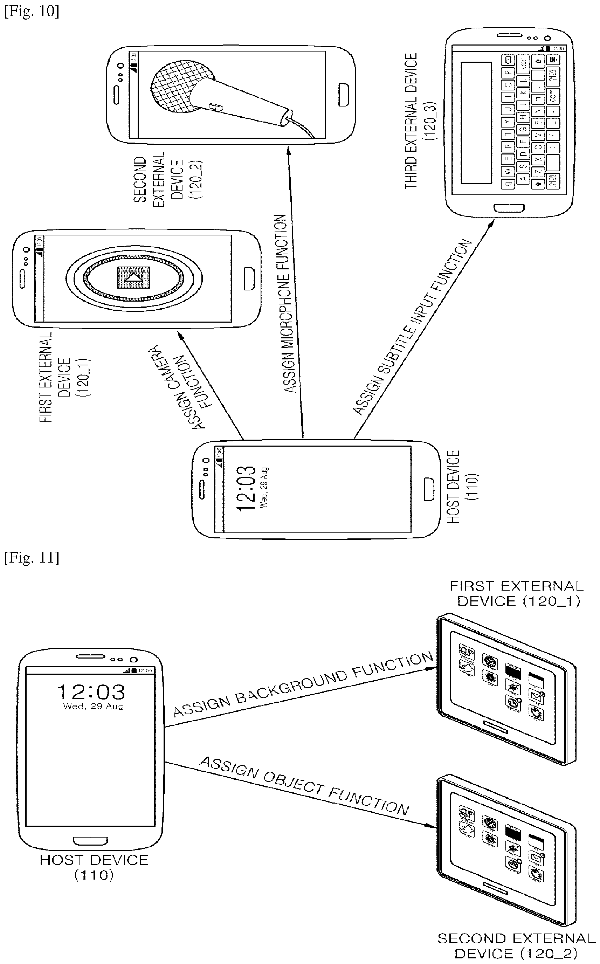

FIG. 10 is a diagram for describing relationships between the host device 110 and the first through third external devices 120_1 through 120_3 when the UCC application is selected according to the screens 910 through 930 shown in FIG. 9 according to an embodiment of the present disclosure.

Referring to FIG. 10, a camera function is assigned to the first external device 120_1, a microphone function is assigned to the second external device 120_2, and a subtitle input function is assigned to the third external device 120_3 so that the first through third external devices 120_1 through 120_3 each execute an application corresponding to a function assigned thereto. Here, functions required to execute the UCC application are not limited to those shown in FIGS. 9 and 10.

FIG. 11 is a diagram for describing relationships between the host device 110 and the first and second external devices 120_1 and 120_2 when an animation editing application is selected according to the method of FIG. 2 according to an embodiment of the present disclosure. A background function is assigned to the first external device 120_1 and an object function is assigned to the second external device 120_2. Functions required to execute the animation editing application are not limited to those depicted in FIG. 11. For example, there may be a plurality of objects, and thus a plurality of object functions.

Also, function information may be set according to a content type to be edited in the animation editing application, as in the ensemble application. For example, when a content type to be edited is an animation video, distributable functions may be set as above, and when a content type to be edited is that of a digital newspaper or an e-book, distributable functions may include an illustration function and a text function.

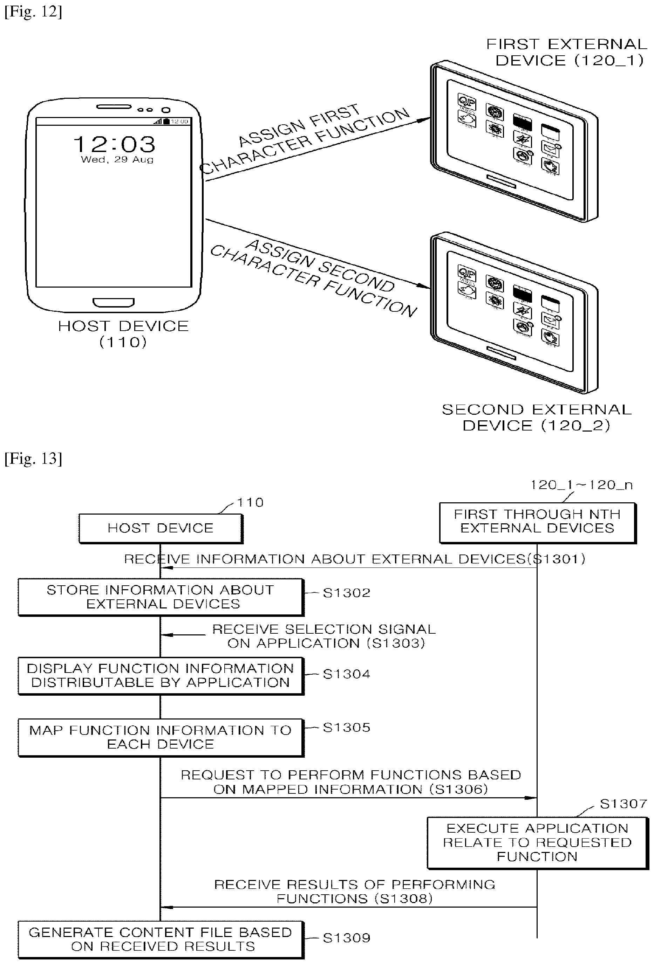

FIG. 12 is a diagram for describing relationships between the host device 110 and the first and second external devices 120_1 and 120_2 when a game application is selected according to the method of FIG. 2 according to an embodiment of the present disclosure. In the game application, distributable functions may be set according to characters in the game application. For example, when a plurality of roles according to characters are required, such as in a building project game application, distributable functions of the building project game application may be set by a character, but are not limited thereto.

Referring to FIG. 12, a first character function is assigned to the first external device 120_1 and a second character function is assigned to the second external device 120_2. When the selected game application is the building project game application, the first character function may be building a Korean-style house, and the second character function may be building a Turkish-style house. However, the function assigned according to characters is not limited thereto.

FIG. 13 is a flowchart illustrating a method of executing an application, according to another embodiment of the present disclosure.

Referring to FIG. 13, the method of FIG. 13 further adds operations in which results of functions performed by the first through nth external devices 120_1 through 120_n are received by the host device 110 and content is generated according to the received results, similar to the method of FIG. 2.

Accordingly, operations S1301 through S1307 of FIG. 13 are respectively similar to operations S201 through S207 of FIG. 2, and thus are not described to avoid repetition.

In operation S1308, the host device 110 receives the results of functions performed by the first through nth external devices 120_1 through 120_n, from the first through nth external devices 120_1 through 120_n. Operation S1308 may be performed by the first through nth external devices 120_1 through 120_n in response to a request received from the host device 110. Alternatively, operation S1308 may be performed by the first through nth external devices 120_1 through 120_n without receiving a request from the host device 110.

In operation S1309, the host device 110 may generate one content file according to the results received from the first through nth external devices 120_1 through 120_n.

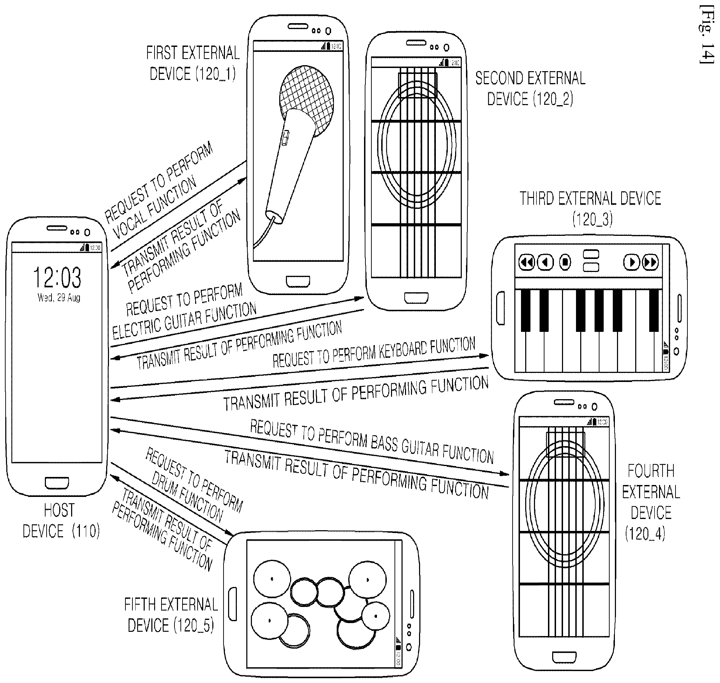

FIG. 14 is a diagram for describing relationships between the host device 110 and the first through fifth external devices 120_1 through 120_5 when an ensemble application is selected according to the method of FIG. 13 according to an embodiment of the present disclosure. Upon receiving results of performed functions from the first through fifth external devices 120_1 through 120_5 after transmitting requests to perform assigned functions to the first through fifth external devices 120_1 through 120_5, the host device 110 may combine the received results to generate one music file. Here, the host device 110 may store and reproduce the combined results.

The results received from the first through fifth external devices 120_1 through 120_5 may be compressed audio files. Accordingly, network usage between the first through fifth external devices 120_1 through 120_5 and the host device 110 may be reduced. The host device 110 decompresses the compressed audio files, and mixes the decompressed audio files to generate a music file. When generating the music file, the host device 110 may convert an audio file format to another audio file format. For example, the host device 110 may convert Windows Media Audio (WMA)-based audio file to Motion Picture Experts Group (MPEG)-2 Audio Layer III (MP3)- based audio file to generate the music file.

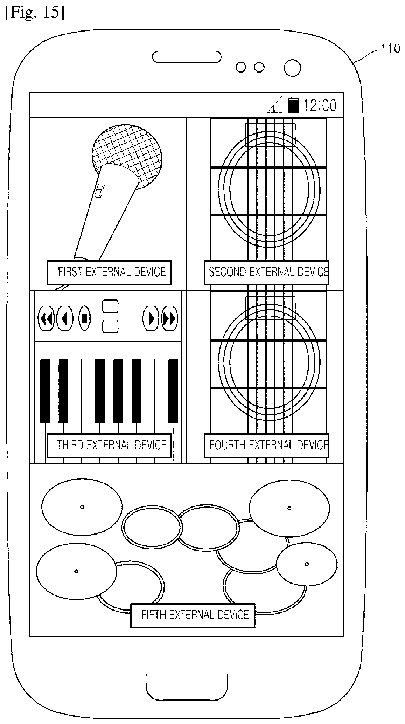

The methods of FIGS. 2 and 13 may further include a process that the host device may monitor the performing of functions assigned in the first through nth external devices 120_1 through 120_n, after requesting the first through nth external devices 120_1 through 120_n to perform the assigned functions. Accordingly, a screen shown in FIG. 15 may be displayed on the host device 110. FIG. 15 illustrates a screen displayed on the host device 110 for monitoring in real-time a function performed by the first through fifth external devices 120_1 through 120_5 when an ensemble application is selected as described with reference to FIGS. 7 and 8 and the first through fifth external devices 120_1 through 120_5 are selected.

Also, mapping between function information and an external device according to the methods of FIGS. 2 and 13 may be modified such that the host device 110 searches for a peripheral device of the host device 110 and information about the found peripheral device and function information are mapped. When the methods of FIGS. 2 and 13 are modified as such, the receiving and storing of the information about the first through nth external devices 120_1 through 120_n by the host device 110 may be omitted.

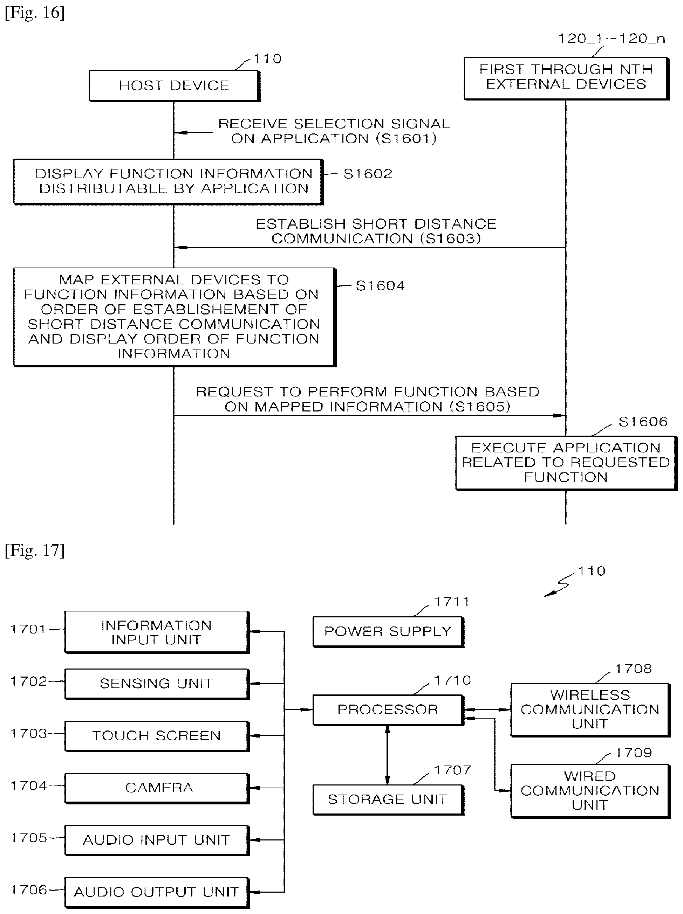

FIG. 16 is a flowchart illustrating a method of executing an application, according to another embodiment of the present disclosure.

Referring to FIG. 16, when an application is selected in the host device 110 in operation S1601, the host device 110 displays function information distributable related to the selected application in operation S1602. The function information may be pre-set, set by the user of the host device 110, or selected by the user of the host device 110 from among pre-set information of the application.

When short distance communication between the host device 110 and external devices is established in operation S1603 while the function information is displayed, the host device 110 maps function information to the external devices according to an order in which short distance communication with each of the external devices is established and an order of functions in the displayed function information in operation S1604.

For example, when the function information is displayed as shown in the screen 720 of FIG. 7, and the order in which short distance communication with each of the external devices is established is the third external device 120_3, the fourth external device 120_4, the second external device 120_2, the fifth external device 120_5, and the first external device 120_1, and the third external device 120_3 is mapped to a vocal function, the fourth external device 120_4 is mapped to a keyboard function, the second external device 120_2 is mapped to an electric guitar function, the fifth external device 120_5 is mapped to a bass guitar function, and the first external device 120_1 is mapped to a drum function.

Here, when short distance communication between the host device 110 and a plurality of external devices are almost simultaneously established, the host device 110 may map the same function information to the plurality of external devices and let the user of the host device 110 select at least one of the plurality of external devices. For example, when short distance communication between the host device 110 and the second and sixth external devices 120_2 and 120_6 are almost simultaneously established while mapping the electric guitar function, the second and sixth external devices 120_2 and 120_6 may be mapped to the electric guitar function, and the user of the host device 110 may select at least one of the second and sixth external devices 120_2 and 120_6.

The short distance communication may be NFC, wherein the host device 110 receives information about external devices according to NFC and determines mapping by using the received information and the function information.

The host device 110 requests the first through nth external devices 120_1 through 120_n to perform an assigned function according to the mapped information in operation S1605. At this time, the host device 110 may transmit requested function information and application information related to the requested function information. The first through nth external devices 120_1 through 120_n execute an application related to the requested function information in operation S1606.

Like the method of FIG. 13, the method of FIG. 16 may be modified such that one content file is generated according to results of functions performed by the first through nth external devices 120_1 through 120_n and the generated content file is reproduced by the host device 110 while the generated content file is stored in the host device 110, after the external devices perform functions.

Like the methods of FIGS. 2 and 13, the method of FIG. 16 may further include monitoring the performing of the functions after requesting the first through nth external devices 120_1 through 120_n to perform the functions.

FIG. 17 is a block diagram of the host device 110 of FIG. 1 according to an embodiment of the present disclosure.

Referring to FIG. 17, the host device 110 includes an information input unit 1701, a sensing unit 1702, a touch screen 1703, a camera 1704, an audio input unit 1705, an audio output unit 1706, a storage unit 1707, a wireless communication unit 1708, a wired communication unit 1709, a processor 1710, and a power supply 1711. However, a structure of the host device 110 is not limited to that shown in FIG. 17. In other words, the host device 110 may include more or fewer components, and the above components may be combined together or with other components.

Input data for controlling operations of the host device 110 and information for selecting an application, requesting the mapping of the distributable function and an external device, and requesting executing of an application may be input to the information input unit 1701, but information that may be input to the information input unit 1701 is not limited thereto. The information input unit 1701 may include a keypad, a dome switch, a jog wheel, a jog switch, hardware, a hot key, or a touch panel, but is not limited thereto.

The sensing unit 1702 senses a current state of the host device 110, for example, a location of the host device 110, contact between the user and the host device 110, an orientation of the host device 110, or acceleration or deceleration of the host device 110, and generates a sensing signal for controlling operations of the host device 110. The sensing unit 1702 may include a proximity sensor and a motion sensor. The sensing unit 1702 may generate a sending signal recognizing a sensor-based gesture of the user.

The proximity sensor uses an electromagnetic field or infrared light to detect, without a mechanical contact, an object approaching or near a pre-set detecting surface. Examples of the proximity sensor include a transmissive photoelectric sensor, a direct reflective photoelectric sensor, a mirror reflective photoelectric sensor, a high frequency oscillation proximity sensor, a capacitance proximity sensor, a magnetic proximity sensor, and an infrared proximity sensor.

The touch screen 1703 may be a resistive film (decompression) type or a capacitance type, but is not limited thereto. The touch screen 1703 may receive a request, selection, or command of the user depending on a touch-based gesture. The touch-based gesture may be defined according to various combinations of a number of touches, a touch pattern, a touch area, and touch intensity, but is not limited thereto.

The touch screen 1703 may include various sensors to sense a touch or a proximity touch on the touch screen 1703. A sensor included in the touch screen 1703 may generate a signal in response to sensing the touch-based gesture or a touch-based pattern. A proximity sensor of the touch screen 1703 may be the same as that included in the sensing unit 1702.

A tactile sensor may be used to detect a touch on the touch screen 1703. The tactile sensor may detect various types of information, such as roughness of a contact surface, hardness of a contact object, and a temperature of a contact point.

A touch on the touch screen 1703 is detected when a pointer touches a touch panel. A proximity touch on the touch screen 1703 is detected when the pointer approaches but does not actually touch the screen. In the case of the proximity touch, a predetermined distance is maintained between the pointer and the screen. The pointer is a tool for touching or proximity-touching a region of the touch screen 1703. Examples of the pointer include a stylus pen and a finger, but are not limited thereto.

The touch screen 1703 displays information processed by the host device 110. For example, the touch screen 1703 may display a screen in response to a gesture or touch pattern sensed through sensors included in the touch screen 1703, control data or user input through the information input unit 1701, or a signal sensed through the sensing unit 1702. Any one of the screens 710 through 730 of FIG. 7 and the screens 910 through 930 of FIG. 9 may be displayed on the touch screen 1703.

The touch screen 1703 may be referred to as an input and output device. A screen displayed on the touch screen 1703 may include a User Interface (UI)-based Graphic User Interface (GUI) screen.

The touch screen 1703 may include at least one of a Liquid Crystal Display (LCD), a Thin Film Transistor (TFT) liquid crystal display, an Organic Light-Emitting Diode (OLED), a flexible display, a 3-dimensional (3D) display, or an Active-Matrix OLED (AMOLED), but is not limited thereto. The touch screen 1703 may be referred to as a display. Two or more touch screens 1703 may exist according to the structure of the host device 110.

The camera 1704 processes an image frame of, for example, a still image or a moving image obtained by an image sensor (or an optical sensor) in a video call mode or a photographing mode. Also, the processed image frame may be displayed on the touch screen 1703. Accordingly, Augmented Reality (AR)-based information about an external device may be provided according to the image frame obtained by the camera 7104.

The image frame processed by the camera 1704 may be stored in the storage unit 1707 or externally transmitted through the wireless communication unit 1708 or the wired communication unit 1709. Two or more cameras 1704 may be used according to the structure of the host device 110. Also, the camera 1704 may be used as an input device for recognizing a spatial gesture of the user.

The audio input unit 1705 receives an external sound signal in a call mode, a recording mode, or a voice recognizing mode, converts the external sound signal to electrical audio data, and transmits the electrical audio data to the processor 1701. The audio input unit 1705 may be a microphone. The audio input unit 1705 may be configured to operate the audio input unit 1705 according to any one of various noise removing algorithms to remove noise generated while receiving the external sound signal.

The external sound signal input through the audio input unit 1705 may include a signal corresponding the user's voice when the host device 110 is mapped to perform a vocal function. When the external sound signal is spoken language-based input information (or a spoken language-based command), the external sound signal may be referred to as a voice-recognition based user input. The external sound signal input through the audio input unit 1705 may be stored in the storage unit 1707 through the processor 1710, or externally transmitted through the processor 1710 and the wireless communication unit 1708 or through the processor 1710 and the wired communication unit 1709.

The audio output unit 1706 outputs a sound signal or audio signal received from the outside or read from the storage unit 1707 in a call mode or an audio reproducing mode. The audio output unit 1706 may be a speaker. When a content is being reproduced and includes an audio signal, the audio output unit 1706 outputs the audio signal included in the reproduced content. The audio input unit 1705 and the audio output unit 1706 may be integrally formed as, for example, a headset.

The storage unit 1707 stores at least one program and/or command sets and resources, which are executable by the processor 1710 described below. Examples of the at least one program include at least one program for executing a method of executing an application, an operating system program of the host device 110, an application program related to various functions or services performed by the host device 110, and a program for driving hardware components included in the host device 110, but are not limited thereto.

Examples of the resources include the information about the first through nth external devices 120_1 through 120_n described above with reference to FIG. 1, the information about the host device 110, information required to operate the application program set in the host device 110, and a program required to drive the hardware components, but are not limited thereto. The information about the host device 110 may include user information of the host device 110, but is not limited thereto. The information about the host device 110 may include information included in the information about the first through nth external devices 120_1 through 120_n.

The storage unit 1707 may include a storage medium of at least one type from among a flash memory type, a hard disk type, a multimedia card micro-type, a card type memory (for example, Secure Digital (SD) or xD memory), a Read-Only Memory (ROM), an Electronically Erasable Programmable Read-Only Memory (EEPROM), a programmable read-only memory (PROM), a magnetic memory, and an optical disk.

The at least one program and/or command sets stored in the storage unit 1707 may be classified into a plurality of modules according to functions.

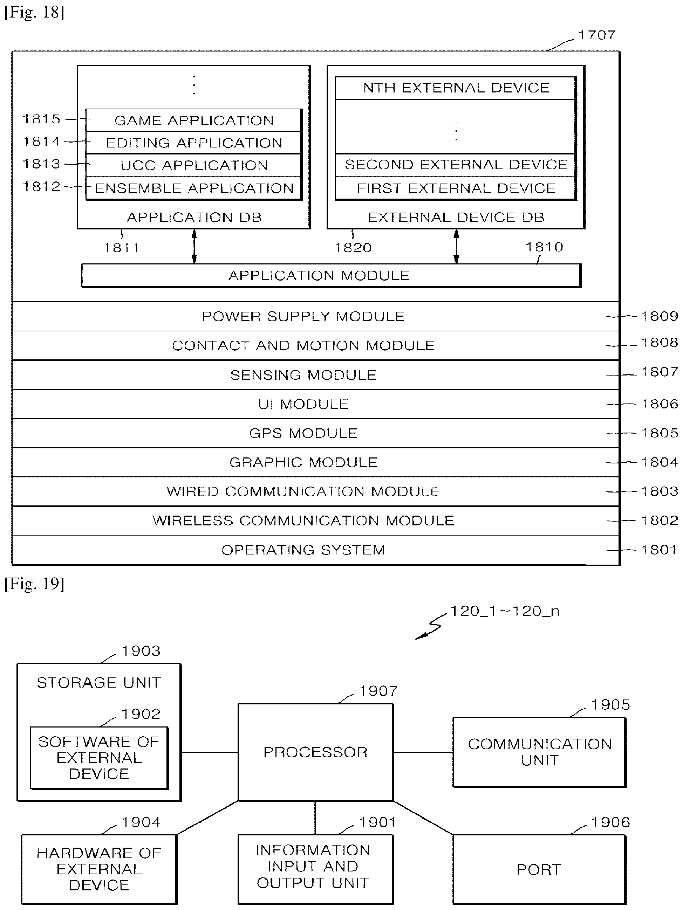

FIG. 18 is a diagram of classifying the programs and/or the command sets stored in the storage unit 1707 of FIG. 17, according to modules according to an embodiment of the present disclosure.

Referring to FIG. 18, the storage unit 1707 may include an operating system 1801, a wireless communication module 1802, a wired communication module 1803, a graphic module 1804, a Global Positioning System (GPS) module 1805, a UI module 1806, a sensing module 1807, a contact and motion module 1808, a power supply module 1809, and an application module 1810.

The application module 1810 may be connected to an application DataBase (DB) 1811 and an external device DB 1820 storing information about an external device. The application DB 1811 may store an ensemble application 1812, a UCC application 1813, an editing application 1814, and a game application 1815, but is not limited thereto.

As described above, the ensemble application 1812, the UCC application 1813, the editing application 1814, and the game application 1815 may be executed by distributing functions among a plurality of external devices, requesting the external devices to perform the distributed functions, receiving results of performing the functions from the external devices, generating a content file according to the results, and storing and reproducing the generated content file.

Also, the information about the first through nth external devices 120_1 through 120_n may be stored in the external device DB 1820. The stored information about the first through nth external devices 120_1 through 120_n may be mapped to the function information. Information stored in the external device DB 1820 is not limited to the information about the first through nth external devices 120_1 through 120_n. For example, in FIG. 16, information stored in the external device DB 1820 may be information about an external device mapped to function information.

The application DB 1811 may further include at least one of various application modules, such as an email module, a Social Network Service (SNS) module, a video conferencing module, an image managing module, a browsing module, a calendar module, a widget module, a search module, and a Word document preparing module.

The operating system 1801 controls and manages general functions of the host device 110, and includes software components enabling communication between hardware and software components included in the host device 110.

The wireless communication module 1802 enables communication between the host device and at least one of the first through nth external devices 120_1 through 120_n through the wireless communication unit 1708. The wireless communication module 1802 includes software components for processing data received from and transmitted to at least one of the first through nth external devices 120_1 through 120_n through the wireless communication unit 1708. The wireless communication module 1802 may communicate wirelessly with a server (not shown) or a relay (not shown) through the wireless communication unit 1708, but a wireless communication target is not limited thereto.

The wired communication module 1803 includes software components for enabling communication between the wired communication unit 1709 including an element, such as a Universal Serial Bus (USB) port, and the first through nth external devices 120_1 through 120_n, and processing data transmitted to and received from the first through nth external devices 120_1 through 120_n through the wired communication unit 1709.

The graphic module 1804 includes software components for adjusting brightness and rendering graphics displayed on the touch screen 1703, and software components for providing a virtual keyword or soft keyboard to input text in the application module 1810.

The GPS module 1805 includes software components for determining the location of the host device 110 and providing the determined location to an application that provides a location-based service. The UI module 1806 includes software components for providing a UI to an application that provides UI information according to the touch screen 1703.

The sensing module 1807 includes software components for determining sensing information according to the sensing unit 1702 and providing the determined sensing information to an application for providing a sensing information-based service. The contact and motion module 1808 includes software components for detecting a touch based contact with the touch screen 1703, tracking a motion according to the contact, and providing the motion to an application that provides a motion-based service.

The power supply module 1809 includes software components for controlling power supply to the hardware components included in the host device 110 in association with the operating system 1801, and controlling a sleep mode of the touch screen 1703.

Since functions of the modules included in the application DB 1811 are the same as those described above with reference to FIGS. 7 through 12, details thereof are not repeated here. The applications described above may be included in the application module 1810.

The storage unit 1707 might not store the modules included in the application DB 1811 from among the programs and/or command sets shown in FIG. 18, but might only store location information, such as a Uniform Resource Locator (URL) of an application module, and display information indicating the application module. In this case, the processor 1710 may use corresponding programs and/or command sets by connecting to an external device having an application DB through the wireless or wired communication unit 1708 or 1709. Here, the external device may be a cloud server or a device having an application DB, but is not limited thereto.

When only the location information and the display information indicating the application module are stored in the storage unit 1707, the processor 1710 may search for information stored in the external device through the wireless or wired communication unit 1708 or 1709 by using the location information corresponding to a selection signal of the user according to the display information of the application module displayed through the touch screen 1703.

The wireless communication unit 1708 may transmit and receive data to and from an external device through a wireless network, for example, wireless Internet communication, wireless Intranet communication, wireless phone network communication, wireless LAN communication, WiFi communication, WiFi Direction (WFD) communication, 3G communication, 4G communication, LTE communication, Bluetooth™ communication, Infrared Data Association (IrDA) communication, Radio Frequency IDentification (RFID) communication, Ultra-Wideband (UWB) communication, or Zigbee™ communication.

The wireless communication unit 1708 may include at least one of a broadcast receiving module, a mobile communication module, a wireless Internet module, a wired Internet module, a short distance communication module, and a location information module.

The wired communication unit 1709 may transmit and receive data to and from an external device through a wired network, such as wired Internet. The wired communication unit 1709 may transmit and receive data to and from the external device by using a plug and play interface, such as a USB port. The wired communication unit 1709 may not be included in components of the host device 110.

The power supply 1711 supplies power to the hardware components included in the host device 110. The power supply 1711 includes one or more power sources, such as a battery and an Alternating Current (AC) supply source. The host device 110 may omit the power supply 1711, and may include a connection unit (not shown) connectable to an external power supply unit (not shown).

The processor 1710 controls overall operations of the host device 110, and may be implemented as one or more processors. The processor 1710 may control the information input unit 1701, the sensing unit 1702, the touch screen 1703, the camera 1704, the audio input unit 1705, the audio output unit 1706, the storage unit 1707, the wireless communication unit 1708, the wired communication unit 1709, and the power supply 1711 by using the operating system 1801 and the various modules 1802 through 1810 stored in the storage unit 1707. Accordingly, the processor 1710 may be referred to as a controller, a microprocessor, or a digital signal processor.

Also, the processor 1710 may provide a UI by using the information input unit 1701, the sensing unit 1702, the touch screen 1703, the camera 1704, and the audio input unit 1705, by using the operating system 1801 and the UI module 1806.

The processor 1710 may perform the method shown in FIG. 2, 13, or 16, or the modified method of FIG. 2, 13, or 16, by executing at least one program related to a method of executing an application. The processor 1710 may read and execute the at least one program from the storage unit 1707, or download and execute the at least one program from an external device connected through the wireless or wired communication unit 1708 or 1709. Here, the external device may be referred to as an application providing server or an application market server. The external device may include the cloud server or a communicable peripheral device of the host device 110, but is not limited thereto. The processor 1710 may include an interface function unit between various hardware components included in the host device 110 and the processor 1710.

The first through nth external devices 120_1 through 120_n of FIG. 1 may be configured as shown in FIG. 17 or 19. For convenience of description, a block diagram shown in FIG. 19 will be described as a block diagram of the first external device 120_1.

Referring to FIG. 19, the first external device 120_1 includes an information input and output unit 1901, a storage unit 1903 storing software 1902 of an external device, hardware 1904 of an external device, a communication unit 1905, a port 1906, and a processor 1907, but is not limited thereto. For example, the first external device 120_1 may omit the port 1906 or might include a power source (not shown). Also, components of the first external device 120_1 may differ from those of the second through nth external devices 120_2 through 120_n in terms of functions or standards.

Referring to FIG. 19, user input information for selecting a communication method for a basic connection and a communication method for a service connection described above with reference to FIGS. 3 through 6 may be input through the information input and output unit 1901. The user input information may be input such that one of an NFC module and a BLE module is selected as the communication method for a basic connection, and one of a wireless LAN communication module and a Bluetooth communication module is selected as the communication method for a service connection. Since the communication methods for a basic connection and service connection are selected according to a structure of the communication unit 1905, the user input information may be input according to the structure of the communication unit 1905.

The information input and output unit 1901 receives the user input information, and outputs information from the first external device 120_1 according to an application executed according to a request from the host device 110. The user input information may be at least one of touch-based input information, physical button control-based input information, gesture-based input information, user voice recognition-based input information, facial recognition-based input information, and remote controller-based input information, but is not limited thereto.

The information input and output unit 1901 may be configured according to input information provided by a user. For example, when the host device 110 requests an external device to play an electric guitar, a guitar play application is executed, and user input information capable of inputting via the first external device 120_1 may include input information provided by the guitar play application.

The storage unit 1903 stores programs and resources required to control overall operations of the first external device 120_1. The programs include a program for performing functions of the first external device 120_1. For example, when the first external device 120_1 is a smart phone, the programs may include a program for controlling functions of the smart phone. The program for controlling the functions of the smart phone may be similar to that stored in the storage unit 1707 of the host device 110. Accordingly, the storage unit 1903 may store the programs or similar programs shown in FIG. 18. However, when the first external device 120_1 is an electric guitar accessory connectable to the host device 110, the software 1902 stored in the storage unit 1903 may be a program capable of executing an application related to the electric guitar accessory. The storage unit 1903 may further include a communication program between the host device 110 and the first external device 120_1.

The storage unit 1903 may store a program capable of controlling hardware of the first external device 120_1 according to each communication method. Accordingly, the program capable of controlling the hardware of the first external device 120_1 may be executed according to a communication method determined by the processor 1907. For example, when a communication method determined by the processor 1907 is a Bluetooth communication method, a program for controlling the hardware of the first external device 120_1 in the Bluetooth communication method may be executed.

The storage unit 1903 may include a storage medium of at least one type from among a flash memory type, a hard disk type, a multimedia card micro-type, a card type memory (for example, an SD or XD memory), a RAM, an SRAM, a ROM, an EEPROM, a PROM, a magnetic memory, and an optical disk.

The resources stored in the storage unit 1903 may include information about the first external device 120_1 and authentication information of the first external device 120_1 described above with reference to FIGS. 1 and 3 through 6, but are not limited thereto.

The hardware 1904 may be defined according to the functions of the first external device 120_1. For example, when the first external device 120_1 is an electric guitar accessory operated by executing an application related to an electric guitar function requested by the host device 110, the hardware 1904 may include a physical function unit required as the application related to the electric guitar function stored in the software 1902 is executed by the processor 1907. The physical function unit may include a metronome sound reproducing module, a guitar sound reproducing module, a speaker, a guitar sound recording module, and a touch sensor for sensing a touch-based input from the information input and output unit 1901, but is not limited thereto.

The first external device 120_1 realizes functions performed in the hardware 1904 in terms of software, and may include a minimum number of components of the hardware 1904 or may omit the hardware 1904. In this case, software is stored as the software 1902 of the storage unit 1903, and the software 1902 may be executed by the processor 1907 according to a control command received from the host device 110.

The communication unit 1905 may include a first short distance communication unit (not shown) including an NFC module and a BLE module, and a second short distance communication unit (not shown) including a wireless LAN communication module and a Bluetooth™ communication module, but is not limited thereto. In other words, the communication unit 1905 may further include a communication unit connectable to a server or relay through a network.

The NFC module included in the communication unit 1905 may include an NFC tag or a readable/writable chip. When an NFC module is mounted on the host device 110, the NFC module included in the communication unit 1905 may be configured to perform bidirectional data communication with the NFC module of the host device 110 in a P2P mode.

The BLE module included in the communication unit 1905 may broadcast information for a service connection and information about an external device as described above with reference to FIG. 4 or 6, further broadcast authentication information of the first external device 120_1 and information about the first external device 120_1, and receive connection information of the relay 300 from the host device 110. Here, information broadcasted from the BLE module may omit information related to an application described above.

The wireless LAN communication module included in the communication unit 1905 may be configured to selectively perform a direct communication method with the host device 110 or a communication method through the relay 300, configured to only perform the direct communication method, or configured to only perform the communication method through the relay 300.

The port 1906 may include at least one of a USB port and a Universal Asynchronous Receiver/Transmitter (UART) port. The first external device 120_1 may omit the port 1906. When the host device 110 and the first external device 120_1 are connected through the port 1906, the host device 110 and the first external device 120_1 may interface through a wired communication channel.

The processor 1907 controls overall operations of the first external device 120_1 by executing the software 1902 stored in the storage unit 1903. Accordingly, the processor 1907 may be referred to as a controller. In detail, the processor 1907 may connect the host device 110 to the first external device 120_1 through the communication unit 1905 in order to perform a method of executing an application.

In the various embodiments described above, a plurality of devices and function information are mapped. However, alternatively, a plurality of users may be mapped to the function information, and devices of the plurality of users may be requested to perform functions according to the mapped information.

The plurality of users may be mapped to the function information by using at least one of information about each user, information about a device of each user, standard information about a device of each user, and information about an application installed in a device of each user.

Information about a user includes contact information and profile information of the user, wherein the profile information may include usage history information about an application of the user. Information about a device of each user may include device information of a user mapped to a selected communication method, but is not limited thereto.

The one or more various embodiments can also be embodied as computer-readable codes stored on a computer readable recording medium. The computer-readable recording medium is any data storage device that can store data which can be thereafter read by a computer system. Examples of the computer-readable recording medium include ROM, Random-Access Memory (RAM), Compact Disc (CD)-ROMs, magnetic tapes, floppy disks, optical data storage devices, etc. The computer-readable recording medium can also be distributed over network coupled computer systems so that the computer-readable code is stored and executed in a distributed fashion.

## Claims

1. A method of executing a karaoke application by a host device (110), the method comprising:
receiving (S1303), by the host device (110), a selection signal for an application for generating at least one audio content file, the application comprising a plurality of distributable functions;
displaying (S1304) function information corresponding to each of the plurality of distributable functions;
mapping (S1305) the function information corresponding to each of the plurality of distributable functions to a plurality of devices (120_1; 120_2; 120_3; 120_n), the mapping producing mapped information;
requesting (S1306) over a short-range wireless communication medium the plurality of devices to perform the plurality of distributable functions according to the mapped information;
receiving (S1308), over a short-range wireless communication medium, by the host device (110), a respective result of performing one of the plurality of distributable functions from each of the plurality of devices; and
generating (S1309), by the host device (110), the at least one audio file based on combining the received results.

2. The method of claim 1, wherein the mapping of the function information comprises mapping the function information corresponding to each of the plurality of distributable function with information about a user of each of the plurality of devices, and with at least one of standard information of each of the plurality of devices or information about an application installed in each of the plurality of devices.

3. The method of claim 2, wherein the information about the user of each of the plurality of devices comprises profile information, and wherein the profile information comprises usage history information of the application.

4. The method of claim 2, wherein the information about the application installed in each of the plurality of devices comprises at least one of type information of the application, version information of the application, or settings information of the application.

5. The method of claim 2, wherein the standard information of each of the plurality of devices comprises at least one of configuration information and hardware standard information.

6. The method of claim 1, wherein the mapping of the function information is performed according to an order of functions in the displayed function information and an order in which short distance communication between each of the plurality of devices and the host device is established.

7. The method of claim 1, wherein the plurality of devices comprises at least one external device of the host device.

8. The method of claim 7, further comprising receiving information about the plurality of devices before the receiving of the selection signal for the application.

9. The method of claim 1, wherein the mapping comprises searching for and finding a peripheral device of the host device, and mapping function information corresponding to at least one of the plurality of distributable functions with information about the peripheral device.

10. The method of claim 9, wherein the information about the peripheral device comprises at least one of information about a user of the peripheral device, hardware standard information of the peripheral device, configuration information of the peripheral device, and information about an application installed in the peripheral device.

11. The method of claim 1, wherein the plurality of devices comprise the host device and at least one external device of the host device.

12. A non-transitory computer-readable recording medium having recorded thereon at least one program comprising commands, which, when executed by a computer, performs the method of claim 1.

13. A device (110) comprising:
a storage unit (1707) configured to store information about the device and about at least one external device of the device, and at least one program;
a communication unit (1708; 1709) configured to communicate with the at least one external device;
a touch screen (1703) configured to receive input information of a user and to output information according to execution of the at least one karaoke program; and
a processor (1710) configured to:
provide a user interface according to the touch screen, and to execute an application for generating at least one audio content file, the application comprising a plurality of distributable functions and distribute the plurality of distributable functions to a plurality of devices by executing the at least one program,
wherein the at least one program comprises commands for executing:
receiving, by the device, a selection signal for the application for generating the at least one content file, the application comprising a plurality of distributable functions;
displaying function information corresponding to each of the plurality of distributable functions;
mapping the function information corresponding to each of the plurality of distributable functions to the plurality of devices, the mapping producing mapped information; and
requesting over a short-range wireless communication medium the plurality of devices to perform the plurality of distributable functions according to the mapped information;
receiving over a short-range wireless communication medium a respective result of performing one of the plurality of distributable functions from each of the plurality of devices; and generating the at least one audio content file based on combining the received results.

## Patentansprüche

1. Verfahren zur Ausführung einer Karaokeanwendung
durch ein Hostgerät (110), wobei das Verfahren Folgendes umfasst:
Empfangen (S1303) durch das Hostgerät (110) eines Auswahlsignals für eine Anwendung zum Erzeugen mindestens einer Audioinhaltsdatei, wobei die Anwendung eine Vielzahl verteilbarer Funktionen umfasst; Anzeigen (S1304) von Funktionsinformationen entsprechend jeder der Vielzahl von verteilbaren Funktionen;
Zuordnen (S1305) der Funktionsinformationen entsprechend jeder der Vielzahl verteilbarer Funktionen zu einer von Geräten (120_1; 120_2; 120_3; 120_n), wobei das Zuordnen zugeordnete Informationen erzeugt; Auffordern (S1306), über ein Kurzstrecken-Funkkommunikationsmedium, der Vielzahl von Geräten, die Vielzahl verteilbarer Funktionen entsprechend den zugeordneten Informationen auszuführen; Empfangen (S1308), über ein Kurzstrecken-Funkkommunikationsmedium, durch das Hostgerät (110), eines jeweiligen Ergebnisses des Durchführens einer der Vielzahl verteilbarer Funktionen von jeder der Vielzahl von Geräten; und
Erzeugen (S1309), durch das Hostgerät (110), der mindestens einen Audiodatei auf der Grundlage des Kombinierens der empfangenen Ergebnisse.

2. Verfahren nach Anspruch 1, wobei das Zuordnen der Funktionsinformationen das Zuordnen der Funktionsinformationen entsprechend jeder der Vielzahl verteilbarer Funktionen zu Informationen über einen Nutzer jeder der Vielzahl von Geräten umfasst, und zu mindestens eines von Standardinformationen jedes der Vielzahl von Geräten oder Informationen über eine in jeder der Vielzahl von Geräten installierte Anwendung.

3. Verfahren nach Anspruch 2, wobei die Informationen über den Nutzer jedes der Vielzahl von Geräten Profilinformationen umfassen, und wobei die Profilinformationen Nutzungsverlaufsinformationen der Anwendung umfassen.

4. Verfahren nach Anspruch 2, wobei die Informationen über die auf jedem der Vielzahl von Geräten installierte Anwendung mindestens eines von Typeninformationen der Anwendung, Versionsinformationen der Anwendung oder Einstellungsinformationen der Anwendung umfassen.

5. Verfahren nach Anspruch 2, wobei die Standardinformationen jedes der Vielzahl von Geräten mindestens eines von Konfigurationsinformationen und Hardwarestandardinformationen umfassen.

6. Verfahren nach Anspruch 1, wobei das Zuordnen der Funktionsinformationen entsprechend einer Reihenfolge von Funktionen in den angezeigten Funktionsinformationen und einer Reihenfolge, in der Kurzstreckenkommunikation zwischen jedem der Vielzahl von Geräten und dem Hostgerät aufgebaut wird, ausgeführt wird.

7. Verfahren nach Anspruch 1, wobei die Vielzahl von Geräten mindestens ein externes Gerät des Hostgeräts umfasst.

8. Verfahren nach Anspruch 7, ferner umfassend Empfangen von Informationen über die Vielzahl von Geräten vor dem Empfangen des Auswahlsignals für die Anwendung.

9. Verfahren nach Anspruch 1, wobei das Zuordnen das Suchen nach und Finden eines Peripheriegeräts des Hostgeräts umfasst, und Zuordnen von Funktionsinformationen, die mindestens einer der Vielzahl verteilbarer Funktionen entsprechen, zu Informationen über das Peripheriegerät umfasst.

10. Verfahren nach Anspruch 9, wobei die Informationen über das Peripheriegerät mindestens eines von Informationen über einen Nutzer des Peripheriegeräts, Hardwarestandardinformationen des Peripheriegeräts, Konfigurationsinformationen des Peripheriegeräts und Informationen über eine im Peripheriegerät installierte Anwendung umfassen.

11. Verfahren nach Anspruch 1, wobei die Vielzahl von Geräten das Hostgerät und mindestens ein externes Gerät des Hostgeräts umfasst.

12. Permanentes computerlesbares Aufzeichnungsmedium mit darauf aufgezeichnet mindestens ein Programm, umfassend Befehle, das bei Ausführung durch eine Computer das Verfahren nach Anspruch 1 ausführt.

13. Gerät (110), umfassend:
eine Speichereinheit (1707), die konfiguriert ist, um Informationen über das Gerät und über mindestens ein externes Gerät des Geräts zu speichern, und mindestens ein Programm; eine Kommunikationseinheit (1708; 1709), die konfiguriert ist, um mit dem mindestens einen externen Gerät zu kommunizieren;
einen Touchscreen (1703), der konfiguriert ist, um Eingabeinformationen eines Nutzers zu empfangen und Informationen entsprechend der Ausführung des mindestens einen Karaokeprogramms auszugeben; und
einen Prozessor (1710), der konfiguriert ist, um:
eine Nutzerschnittstelle entsprechend dem Touchscreen bereitzustellen und eine Anwendung zum Erzeugen mindestens einer Audioinhaltsdatei auszuführen, wobei die Anwendung
eine Vielzahl verteilbarer Funktionen umfasst, und die Vielzahl verteilbarer Funktionen durch Ausführen des mindesten einen Programms an eine Vielzahl von Geräten zu verteilen,
wobei das mindestens eine Programm Befehle zum Ausführen von Folgendem umfasst:
Empfangen, durch das Gerät, eines Auswahlsignals für die Anwendung zum Erzeugen der mindestens einen Inhaltsdatei, wobei die Anwendung eine Vielzahl verteilbarer Funktionen umfasst;
Anzeigen von Funktionsinformationen entsprechend jeder der Vielzahl verteilbarer Funktionen;
Zuordnen der Funktionsinformationen entsprechend jeder der Vielzahl verteilbarer Funktionen zu der Vielzahl von Geräten, wobei das Zuordnen zugeordnete Informationen erzeugt; und Auffordern über ein Kurzstrecken-Funkkommunikationsmedium, der Vielzahl von Geräten, die Vielzahl verteilbarer Funktionen entsprechend den zugeordneten Informationen auszuführen; Empfangen, über ein Kurzstrecken-Funkkommunikationsmedium eines jeweiligen Ergebnisses des Durchführens einer der Vielzahl verteilbarer Funktionen von jeder der Vielzahl von Geräten; und Erzeugen der mindestens einen Audioinhaltsdatei auf der Grundlage der Kombination der empfangenen Ergebnisse.

## Revendications

1. Méthode d'exécution d'une application de karaoké par un appareil hôte (110), la méthode comprenant :
la réception (S1303), par l'appareil hôte (110), d'un signal de sélection pour une application pour générer au moins un fichier de contenus audio, l'application comprenant une pluralité de fonctions distribuables ;
l'affichage (S1304) d'informations de fonction correspondant à chacune de la pluralité de fonctions distribuables ;
le mappage (S1305) des informations de fonction correspondant à chacune de la pluralité de fonctions distribuables à une pluralité de dispositifs (120_1; 120_2; 120_3; 120_n), le mappage produisant des informations mappées ;
sur un support de communications sans fil de courte portée, la demande (S1306) à la pluralité de dispositifs d'exécution de la pluralité de fonctions distribuables conformément aux informations mappées ;
la réception (S1308), sur un support de communications sans fil de courte portée, par l'appareil hôte (110), d'un résultat respectif de l'exécution d'une de la pluralité de fonctions distribuables depuis chacun de la pluralité de dispositifs ; et
la génération (S1309), par l'appareil hôte (110), de l'au moins un fichier audio sur la base de la combinaison des résultats reçus.

2. Méthode selon la revendication 1, le mappage des informations de fonction comprenant le mappage des informations correspondant à chacune de la pluralité de fonctions distribuables avec des informations sur un utilisateur de chacun de la pluralité de dispositifs, et avec au moins une des informations standard sur chacun de la pluralité de dispositifs ou des informations sur une application installée dans chacun de la pluralité des dispositifs.

3. Méthode selon la revendication 2, les informations sur un utilisateur de chacun de la pluralité de dispositifs comprenant des informations sur le profil, et les informations sur le profil comprenant des informations sur l'historique d'utilisation de l'application.

4. Méthode selon la revendication 2, les informations sur l'application installée dans chacun de la pluralité des dispositifs comprenant au moins une des informations sur le type d'application, des informations sur la version de l'application, ou des informations sur les paramètres de l'application.

5. Méthode selon la revendication 2, les informations standard sur chacun de la pluralité de dispositifs comprenant au moins une des informations sur la configuration et des informations standard sur le matériel.

6. Méthode selon la revendication 1, le mappage des informations de fonction étant effectué conformément à un ordre de fonctions dans les informations de fonction affichées et un ordre dans lequel les communications à courte distance entre chacun de la pluralité des dispositifs et de l'appareil hôte sont établies.

7. Méthode selon la revendication 1, la pluralité des dispositifs comprenant au moins un dispositif externe de l'appareil hôte.

8. Méthode selon la revendication 7, comprenant en outre la réception d'informations sur la pluralité des dispositifs avant la réception du signal de sélection pour l'application.

9. Méthode selon la revendication 1, le mappage comprenant la recherche et la localisation d'un dispositif périphérique de l'appareil hôte, et d'informations sur la fonction de mappage correspondant à au moins une de la pluralité de fonctions distribuables avec des informations sur le dispositif périphérique.

10. Méthode selon la revendication 9, les informations sur le dispositif périphérique comprenant au moins une des suivantes : informations sur un utilisateur du dispositif périphérique, informations standard sur le matériel du dispositif périphérique, informations sur la configuration du dispositif périphérique, et informations sur une application installée dans le dispositif périphérique.

11. The Méthode selon la revendication 1, la pluralité de dispositifs comprenant l'appareil hôte et au moins un dispositif externe de l'appareil hôte.

12. Support d'enregistrement lisible par ordinateur non transitoire sur lequel a été enregistré au moins un programme comprenant des commandes, qui, lorsqu'elles sont exécutées par un ordinateur, effectue la méthode selon la revendication 1.

13. Appareil (110) comprenant :
une unité de mémoire (1707) configurée pour mémoriser des informations sur l'appareil et sur au moins un dispositif externe de l'appareil ; et
au moins un programme ;
une unité de communication (1708; 1709) configurée pour communiquer avec l'au moins un dispositif externe ;
un écran tactile (1703) configuré pour recevoir des informations d'entrée d'un utilisateur, et émettre des informations selon l'exécution de l'au moins un programme de karaoké ; et
un processeur (1710) configuré pour :
fournir une interface utilisateur selon l'écran tactile, et exécuter une application pour générer au moins un fichier de contenu audio, l'application comprenant une pluralité de fonctions pouvant être distribuées, et distribuer la pluralité de fonctions pouvant être distribuées à une pluralité de dispositifs en exécutant l'au moins un programme,
l'au moins un programme comprenant des commandes pour exécuter :
la réception, par l'appareil, d'un signal de sélection pour la génération, par l'application, de l'au moins un fichier de contenu, l'application comprenant une pluralité de fonctions pouvant être distribuées ;
l'affichage d'informations de fonction correspondant à chacune de la pluralité de fonctions pouvant être distribuées ;
le mappage des informations de fonction correspondant à chacune de la pluralité de fonctions pouvant être distribuées à la pluralité de dispositifs, le mappage produisant des informations mappées ; et
la réception, sur un support de communications sans fil de courte portée, d'un résultat respectif de l'exécution d'une de la pluralité de fonctions pouvant être distribuées depuis chacun de la pluralité de dispositifs ; et
la génération de l'au moins un fichier de contenu audio basée sur la combinaison des résultats reçus.
